(19) Europäisches Patentamt
European Patent Office
Office européen des brevets

(11) **EP 4 137 846 A1**

(12) **EUROPEAN PATENT APPLICATION**
published in accordance with Art. 153(4) EPC

(43) Date of publication:
**22.02.2023 Bulletin 2023/08**

(21) Application number: **21796173.9**

(22) Date of filing: **08.03.2021**

(51) International Patent Classification (IPC):
***G01S 13/89*** (2006.01)

(52) Cooperative Patent Classification (CPC):
**G01C 21/32; G01S 13/89**

(86) International application number:
**PCT/CN2021/079588**

(87) International publication number:
**WO 2021/218388 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.05.2020 CN 202010368565**

(71) Applicant: **Huawei Technologies Co., Ltd.
Longgang District,
Shenzhen,
Guangdong 518129 (CN)**

(72) Inventors:
• **ZHOU, Wei
Shenzhen, Guangdong 518129 (CN)**
• **ZHU, Youtuan
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **HIGH-PRECISION MAP GENERATION METHOD, LOCALIZATION METHOD, AND DEVICE**

(57) This application provides a high-precision map generation method and a positioning method and apparatus, so as to improve positioning accuracy of a high-precision map in a special environment. The high-precision map generation method includes: obtaining target polarization information (301) collected by a radar sensor of a measurement apparatus, where the target polarization information is used to describe target boundary information and target attribute information; determining a radar feature layer (302) based on the target polarization information and positioning information of the measurement apparatus; and generating a high-precision map (303) based on the radar feature layer.

```
┌─────────────────────────────────────────────────────────────┐ ⌐ 301
│ Obtain target polarization information collected by a radar   │
│ sensor of a vehicle                                           │
└─────────────────────────────────────────────────────────────┘
                            │
                            ▼
┌─────────────────────────────────────────────────────────────┐ ⌐ 302
│ Determine a radar feature layer based on the target           │
│ polarization information and positioning information of the    │
│ vehicle                                                        │
└─────────────────────────────────────────────────────────────┘
                            │
                            ▼
┌─────────────────────────────────────────────────────────────┐ ⌐ 303
│ Generate a high-precision map based on the radar feature layer │
└─────────────────────────────────────────────────────────────┘
```

FIG. 3

EP 4 137 846 A1

**Description**

**CROSS-REFERENCE TO RELATED APPLICATIONS**

This application claims priority to Chinese Patent Application No. 202010368565.0, filed with the China National Intellectual Property Administration on May 1, 2020 and entitled "HIGH-PRECISION MAP GENERATION METHOD AND POSITIONING METHOD AND APPARATUS", which is incorporated herein by reference in its entirety.

**TECHNICAL FIELD**

Embodiments of this application relate to the field of internet of vehicles technologies, and in particular, to a high-precision map generation method and a positioning method and apparatus.

**BACKGROUND**

With increasingly more vehicles in the city, traffic becomes increasingly more crowded. To accommodate increasing vehicle flow, roads in the city are designed to be increasingly more complex. However, a manner of positioning a vehicle through GNSS positioning may not meet a driving requirement in some sub-divided scenarios of autonomous driving. For example, when GNSS positioning is used in a scenario such as a tunnel, a subway, or an elevated bridge, drifting is easily caused during GNSS positioning, and in addition, there is a specific probability that a positioning signal of a GNSS cannot be obtained. Consequently, a driving requirement in a scenario such as autonomous driving cannot be implemented.

Based on this, currently, there is also a manner of positioning a vehicle by using a camera-based simultaneous localization and mapping (simultaneous localization and mapping, SLAM) technology. A main principle of this manner is that a model of an environment is established in a moving process by using a camera when there is no prior information of the environment, and in addition, motion of the vehicle is estimated.

However, the foregoing manner excessively depends on the camera. In a relatively serve weather condition, for example, when visibility is relatively low or an object on a road is covered by fallen leaves, effective environment information cannot be photographed by using the camera to implement positioning. In this case, reliability is relatively low, and in addition, positioning precision of the foregoing manner is also relatively low.

**SUMMARY**

Embodiments of this application provide a high-precision map generation method and a positioning method and apparatus, to improve a positioning effect for a vehicle.

Specific technical solutions provided in embodiments of this application are as follows:

According to a first aspect, a high-precision map generation method is provided, and the method may be performed by a vehicle with a measurement apparatus, a measurement apparatus with a measurement function of a radar sensor, or a map server. Specific steps of the method include: obtaining target polarization information collected by a radar sensor of the measurement apparatus, where the target polarization information is used to describe target boundary information and target attribute information; determining a radar feature layer based on the target polarization information and positioning information of the measurement apparatus; and generating a high-precision map based on the radar feature layer.

In the foregoing method, a target may be better identified in some sub-divided scenarios based on the target boundary information and the target attribute information that are described by the target polarization information collected by the radar sensor. Further, the radar feature layer and the high-precision map are generated based on the target polarization information collected by the radar sensor, and the high-precision map may be used for positioning in some sub-divided scenarios, so that reliability of the high-precision map is improved.

In a possible implementation, polarization information that is of an echo signal and that is collected by the radar sensor of the measurement apparatus is obtained, a boundary feature of the target and a material feature of the target are determined based on the polarization information, and the target polarization information is determined based on the boundary feature of the target and the material feature of the target.

In the foregoing method, the boundary feature of the target and the material feature of the target may be determined based on the polarization information that is of the echo signal and that is collected by the radar sensor. The target polarization information generated in this way can better provide more effective information for target identification in some sub-divided scenarios, so that reliability of the high-precision map is improved.

In a possible implementation, target Doppler information collected by the radar sensor of the measurement apparatus is obtained, polarization information of a static target in the target polarization information is determined based on the target Doppler information, and the radar feature layer is determined based on the polarization information of the static target and the positioning information of the measurement apparatus.

In the foregoing method, the static target may be determined by using the target Doppler information collected by the radar sensor of the measurement apparatus, to screen the target polarization information and eliminate interference exerted by target polarization information of a non-static target on the radar feature layer, so that matching efficiency when the high-precision map is used for vehicle positioning can be effectively improved, and a requirement on a processing capability of a device that uses the high-precision map for positioning can be reduced. In addition, storage space occupied by the radar feature layer in the high-precision map can also be reduced, and a storage requirement on a device that stores the high-precision map can be reduced, so that performance of the high-precision map is improved.

In a possible implementation, the target boundary information includes at least one of the following: boundary information of a road in different environments, boundary information of road clearance in different environments, or boundary information of a roadside object in different environments, and the target attribute information includes at least one of the following: material information of a road boundary in different environments, material information of a road net height in different environments, or material information of a roadside object in different environments.

In the foregoing method, the high-precision map in this application can be used to identify targets in different environments. For example, road materials and road boundaries in different environments are identified, so that the high-precision map in this application may be used for vehicle navigation and vehicle positioning in different environments (in a scenario such as when a lane is covered or when there is no lane line). Alternatively, the high-precision map is used to identify boundaries and materials of roadside objects in different environments, so that the high-precision map in this application may be used for vehicle navigation and vehicle positioning in different environments (in a scenario such as in special weather, when fallen leaves cover the road, or in weather with accumulated water or accumulated snow). The high-precision map may also be used to identify road net heights in different environments, so that the high-precision map in this application may be used for vehicle navigation and vehicle positioning when it is difficult to use GNSS positioning or it is difficult for another sensor to implement positioning in a scenario such as a tunnel, a subway, or an elevated bridge.

In a possible implementation, the radar feature layer is determined based on the positioning information of the measurement apparatus and target polarization information that is in the target polarization information collected by the radar sensor and whose characteristic value is greater than a first characteristic threshold, and the characteristic value includes at least one of the following: a distance, a horizontal angle, a pitch angle, target Doppler information, target reflected power, or angle measurement accuracy.

In the foregoing method, the target polarization information may be screened by using a characteristic value of the target polarization information collected by the radar sensor of the measurement apparatus, and interference exerted by target polarization information of relatively poor quality on the radar feature layer is eliminated, so that matching performance and matching efficiency when the high-precision map is used for vehicle positioning can be effectively improved, and a requirement on a processing capability of a device that uses the high-precision map for positioning can be reduced. In addition, storage space occupied by the radar feature layer in the high-precision map can also be reduced, and a storage requirement on a device that stores the high-precision map can be reduced, so that performance of the high-precision map is improved.

In a possible implementation, a weight of the target polarization information is determined based on the target polarization information and the positioning information of the measurement apparatus, and radar feature information that is in the radar feature layer and that is at a map location corresponding to the positioning information is determined based on the weight and the target polarization information. The radar feature information at the map location is used to provide positioning information for a vehicle.

In the foregoing method, a plurality of pieces of target polarization information collected by the radar sensor of the measurement apparatus may be fused by using the plurality of pieces of target polarization information and corresponding weights, so that accuracy of the target polarization information is improved, and matching performance when the high-precision map is used for vehicle positioning can be effectively improved.

According to a second aspect, an embodiment of this application further provides a high-precision map generation apparatus. The apparatus includes units configured to perform the steps in the first aspect, and may specifically include a transceiver unit and a processing unit. The high-precision map generation apparatus may be a vehicle that has a measurement apparatus and that performs the method in the first aspect, a chip disposed in the vehicle, a measurement apparatus with a measurement function of a radar sensor, a chip disposed in the measurement apparatus, a map server, or a chip disposed in the map server. The high-precision map generation apparatus includes corresponding modules, units, or means (means) for implementing the foregoing method. The modules, units, or means may be implemented by hardware or software or by hardware by executing corresponding software. The hardware or the software includes one or more modules or units corresponding to the foregoing functions.

According to a third aspect, this application provides a high-precision map generation apparatus. The high-precision map generation apparatus may include a processor, configured to implement the method described in the first aspect. The apparatus may be applied to a map server. For example, the high-precision map generation apparatus is a map server, or is a chip disposed in the map server. A transceiver is implemented, for example, by using an antenna, a feeder, or a codec in the map server, or if the positioning apparatus is a chip disposed in the map server, an interface circuit is, for example, a communication interface in the chip, and the communication interface is connected to a radio frequency transceiver component in the map server, to transmit/receive information by using the radio frequency transceiver component. The apparatus may be further applied to a measurement device. For example, the measurement device includes a roadside unit, a measurement apparatus in the roadside unit, and a vehicle or a measurement apparatus in the vehicle. The measurement device may be a roadside unit, a chip used in the roadside unit, a measurement apparatus in the roadside unit, or a chip used in the measurement apparatus in the roadside unit, or the measurement device may be a vehicle with a measurement device function or a chip used in the vehicle with the measurement device function. Alternatively, the apparatus may be a vehicle that includes a measurement apparatus with a measurement function, a chip used in a vehicle with a measurement device function, a combined component or part with a measurement device function in a vehicle-mounted apparatus, or another combined component or part with a measurement device function.

The apparatus may further include a memory, configured to store a program and instructions. The memory is coupled to the processor, and when executing the program and the instructions stored in the memory, the processor may implement the method described in the first aspect. The apparatus may further include an interface circuit, and the interface circuit is used by the apparatus to communicate with another device. For example, the interface circuit may be a transceiver, a circuit, a bus, a module, or another type of interface circuit.

According to a fourth aspect, this application provides a positioning method. The method may be performed by a vehicle, and the vehicle includes a radar sensor. Alternatively, the method may be performed by a map server. Specific steps of the method include: obtaining target polarization information collected by the radar sensor on a road on which the vehicle currently travels, where the target polarization information is used to describe target boundary information and target attribute information; obtaining a radar feature layer of a high-precision map; determining, based on the target polarization information collected on the road on which the vehicle currently travels and the radar feature layer, radar feature information that is in the radar feature layer and that matches the target polarization information; determining, based on the radar feature information, positioning information corresponding to the radar feature information; and determining a location of the vehicle based on the positioning information.

In the foregoing method, the target polarization information collected by the radar sensor of the vehicle is matched with the radar feature information in the radar feature layer, so that a target can be better identified in some sub-divided scenarios, and matching precision of matching with the radar feature information in the radar feature layer is improved, to improve a vehicle positioning effect for the vehicle in a special scenario.

In a possible implementation, polarization information that is of an echo signal and that is collected by the radar sensor on the road on which the vehicle currently travels is obtained, a boundary feature of the target and a material feature of the target are determined based on the polarization information, and the target polarization information is determined based on the boundary feature of the target and the material feature of the target.

In the foregoing method, the boundary feature of the target and the material feature of the target may be determined based on the polarization information that is of the echo signal and that is collected by the radar sensor. The target polarization information generated in this way can better provide more effective information for target identification in some sub-divided scenarios, to increase a matching degree of matching with the radar feature information in the radar feature layer, so that a positioning effect in the special scenario is improved.

In a possible implementation, a boundary feature and a material feature of a target that are corresponding to the target polarization information are determined based on the target polarization information, an environment in which the target is located is determined based on the material feature that is of the target and that is corresponding to the target polarization information, and the radar feature information that is in the radar feature layer and that matches the target polarization information is determined based on the boundary feature of the target and the environment in which the target is located.

In the foregoing method, the boundary feature of the target and the material feature of the target may be determined, so that targets in different environments are better identified, and the radar feature information that is in the radar feature layer and that matches the target polarization information is better determined, to improve a positioning effect.

In a possible implementation, road boundary information of a road on which the vehicle is located is determined based on the radar feature information that is in the radar feature layer and that matches the target polarization information, and a navigation route is planned for the vehicle based on the location of the vehicle and the road boundary information.

In the foregoing method, boundaries and materials of roads in different environments may be determined, to navigate and position the vehicle in different environments (in a scenario such as in special weather, when fallen leaves cover the road, or in weather with accumulated water or accumulated snow, or in a scenario such as a tunnel, a subway, or an elevated bridge) based on the matched radar feature information in the radar feature layer, so that a navigation effect is improved.

In a possible implementation, the radar feature layer includes radar feature information in different environments. It is determined, based on the environment in which the target is located, that the target is covered by an obstruction; a boundary feature of a part that is of the target and that is not covered by the obstruction is determined based on the target polarization information and radar feature information in an environment with the obstruction in the radar feature layer; and the boundary feature of the part that is of the target and that is not covered by the obstruction is matched with radar feature information of an object in the radar feature layer.

In the foregoing method, the boundary feature of the part that is of the target and that is not covered by the obstruction may be determined based on the target polarization information, to avoid impact exerted by the obstruction on target identification, so that an effect of matching the target polarization information with the radar feature information in the radar feature layer is improved, and therefore a positioning effect is improved.

In a possible implementation, the radar feature layer includes radar feature information in different environments. It is determined, based on the environment in which the target is located, that the target is covered by an obstruction, and a boundary feature that is of the target and that is in the target polarization information is matched with radar feature information in an environment with the obstruction in the radar feature layer

In the foregoing method, impact exerted by the obstruction on target identification can be avoided, so that an effect of matching the target polarization information with the radar feature information in the radar feature layer is improved, and therefore a positioning effect is improved.

In a possible implementation, the radar feature layer includes radar feature information in different environments. It is determined, based on the environment in which the target is located, that the target is in an environment with coverage of accumulated water/accumulated snow; a boundary feature of a part that is of the target and that is not covered by the accumulated water/accumulated snow is determined based on the target polarization information and radar feature information in the environment with accumulated water/accumulated snow in the radar feature layer; and the boundary feature of the part that is of the target and that is not covered by the accumulated water/accumulated snow is matched with the radar feature information in the radar feature layer

In the foregoing method, a boundary feature of a target that is not covered by accumulated water/accumulated snow may be determined based on the target covered by accumulated water/accumulated snow, to be matched with radar feature information that is of a target not covered by accumulated water/accumulated snow and that is in the radar feature layer. In this way, impact exerted by coverage of accumulated water/accumulated snow on target identification is reduced, and a vehicle positioning effect in an environment with coverage of accumulated water/accumulated snow is improved.

In a possible implementation, the radar feature layer includes radar feature information in different environments. It is determined, based on an environment in which the target is located, that the target is in an environment with coverage of accumulated water, and a boundary feature of the target covered by accumulated water is matched with radar feature information in the environment with coverage of accumulated water in the radar feature layer. Alternatively, it is determined, based on an environment in which the target is located, that the target is in an environment with coverage of accumulated snow, and a boundary feature of the target covered by accumulated snow is matched with radar feature information in the environment with coverage of accumulated snow in the radar feature layer.

In the foregoing method, the boundary feature of the target covered by accumulated water/accumulated snow may be determined based on the target covered by accumulated water/accumulated snow, to be matched with radar feature information in different environments that is included in the radar feature layer, so that a vehicle positioning effect in the environment with coverage of accumulated water/accumulated snow is improved.

According to a fifth aspect, an embodiment of this application further provides a positioning apparatus. The apparatus includes units configured to perform the steps in the fourth aspect, and may specifically include a transceiver unit and a processing unit. The positioning apparatus may be a vehicle that has a radar sensor and that performs the method in the fourth aspect, a chip disposed in the vehicle, a map server, or a chip disposed in the map server. The positioning apparatus includes corresponding modules, units, or means (means) for implementing the foregoing method. The modules, units, or means may be implemented by hardware or software or by hardware by executing corresponding software. The hardware or the software includes one or more modules or units corresponding to the foregoing functions.

According to a sixth aspect, this application provides a positioning apparatus. The positioning apparatus may include a processor, configured to implement the method described in the fourth aspect. The apparatus may be applied to a map server. For example, the positioning apparatus is a map server, or is a chip disposed in the map server. A transceiver is implemented, for example, by using an antenna, a feeder, or a codec in the map server, or if the positioning apparatus is a chip disposed in the map server, an interface circuit is, for example, a communication interface in the chip, and the communication interface is connected to a radio frequency transceiver component in the map server, to transmit/receive information by using the radio frequency transceiver component. The apparatus may alternatively be a vehicle with a measurement device function, and is applied to a chip in the vehicle with the measurement device function, or the apparatus may be a vehicle including a measurement apparatus with a measurement function, and is applied to a chip in a vehicle with a measurement device function, a combined component or part with a measurement device function in a vehicle-mounted apparatus, or another combined component or part with a measurement device function.

The apparatus may further include a memory, configured to store a program and instructions. The memory is coupled to the processor, and when executing the program and the instructions stored in the memory, the processor may implement the method described in the fourth aspect. The apparatus may further include an interface circuit, and the interface circuit is used by the apparatus to communicate with another device. For example, the interface circuit may be a transceiver, a circuit, a bus, a module, or another type of interface circuit.

According to a seventh aspect, an embodiment of this application further provides a computer program, and when the computer program is run on a computer, the computer can be enabled to perform various possible methods provided in the first aspect or the fourth aspect.

According to an eighth aspect, an embodiment of this application further provides a computer storage medium. A computer program is stored in the computer storage medium. When the computer program is executed by a computer, the computer can be enabled to perform various possible methods provided in the first aspect or the fourth aspect.

According to a ninth aspect, an embodiment of this application further provides a chip. The chip is configured to read a computer program stored in a memory, to perform various possible methods provided in the first aspect or the fourth aspect. The chip may be coupled to the memory.

According to a tenth aspect, an embodiment of this application further provides a chip system. The chip system includes a processor, configured to support a computer apparatus in implementing various possible methods provided in the first aspect or the fourth aspect. In a possible design, the chip system further includes a memory, and the memory is configured to store a program and data that are used for the computer apparatus. The chip system may include a chip, or include a chip and another discrete device.

According to an eleventh aspect, an embodiment of this application further provides a positioning system, including a user interface, the corresponding high-precision map generation apparatus in the second aspect or the third aspect, and the positioning apparatus in the fifth aspect or the sixth aspect.

For technical effects of the second aspect to the eleventh aspect or each possible implementation, refer to descriptions of technical effects of corresponding implementations of the first aspect or the fourth aspect.

**BRIEF DESCRIPTION OF DRAWINGS**

FIG. 1 is a schematic diagram of an application scenario to which an embodiment of this application is applicable;

FIG. 2a is a schematic diagram of a conventional navigation map;

FIG. 2b is a schematic diagram of adding a radar feature layer to a conventional navigation map;

FIG. 3 is a schematic flowchart of a high-precision map generation method according to an embodiment of this application;

FIG. 4 is a schematic diagram of a high-precision map;

FIG. 5 is a schematic flowchart of a positioning method according to an embodiment of this application;

FIG. 6 is a schematic diagram of application of a positioning method on a conventional road according to an embodiment of this application;

FIG. 7 is a schematic diagram of navigation application of a positioning method in a scenario of turning on a curve with no lane line according to an embodiment of this application;

FIG. 8 is a schematic diagram of navigation application of a positioning method in a scenario in which a lane line is covered according to an embodiment of this application;

FIG. 9 is a schematic diagram of navigation application of a positioning method in a scenario in which there is accumulated water on a road surface according to an embodiment of this application;

FIG. 10 is a schematic diagram of navigation application of a positioning method in a scenario in which there is accumulated snow on a road surface according to an embodiment of this application;

FIG. 11 is a schematic diagram of a structure of a high-precision generation apparatus according to an embodiment of this application;

FIG. 12 is a schematic diagram of a structure of a high-precision generation apparatus according to an embodiment of this application;

FIG. 13 is a schematic diagram of a structure of a positioning apparatus according to an embodiment of this application; and

FIG. 14 is a schematic diagram of a structure of a positioning apparatus according to an embodiment of this application.

**DESCRIPTION OF EMBODIMENTS**

The following describes in detail embodiments of this application with reference to accompanying drawings.

A high-precision map construction and using method provided in embodiments of this application may be applied to an intelligent transportation system. A vehicle in the intelligent transportation system may use the high-precision map to implement a transportation service. An application scenario may be unmanned driving, autonomous driving, intelligent driving, connected driving, or the like, and may be further applied to a scenario such as an ADAS. The ADAS may use a radar to perceive an environment around a vehicle, to assist blind spot monitoring, lane changing assistance, collision warning, adaptive cruise, and the like. The transportation service described in embodiments of this application may be various self-driving and auxiliary driving services, for example, path planning and driving risk warning provided for manual driving. The transportation service is only an example. According to the high-precision map construction and using method provided in embodiments of this application, technical preparations are provided for rapid launching and continuous updating of a vehicle to x (vehicle to x, V2X) service between a vehicle and another apparatus. V2X is, for example, vehicle to vehicle (vehicle to vehicle, V2V) or vehicle to installation (vehicle to installation, V2I).

In autonomous driving and auxiliary driving, an intelligent vehicle needs to perceive a surrounding environment. There are relatively fixed targets, such as a lane line and a traffic sign, and there are relatively dynamic targets, such as a vehicle and a pedestrian target. For different targets, different updating frequencies may need to be set to perceive the targets. Different targets may be perceived by different sensors. For example, on an intelligent vehicle, sensors may include a millimeter wave radar, a camera, a laser radar, and the like, and the vehicle may obtain a relative location or a relative speed between a target and the vehicle by using the millimeter wave radar, and relatively fixed targets may be classified and identified by using the camera when a photographing condition is relatively good. Therefore, the vehicle may detect and classify environments around the vehicle by using the sensors, and transmit the information to a planning and control module, to form a decision on a future traveling path of the vehicle, and the decision is finally executed by an executor, to complete an entire auxiliary driving or autonomous driving process.

In the following, some terms in this application are described, so as to help persons skilled in the art have a better understanding.

(1) A positioning may be a handheld device or a vehicle-mounted device with a wireless connection function. A common positioning device may be, for example, a vehicle-mounted radar, a mobile phone, a tablet computer, a notebook computer, a palmtop computer, a mobile internet device (mobile internet device, MID), or a wearable device such as a smartwatch, a smart band, or a pedometer. In embodiments of this application, the positioning device may alternatively be a device with a GNSS positioning function.

(2) A radar sensor may be a millimeter wave radar based on a phased array, may be a millimeter wave radar formed based on a digital beam, may be a millimeter wave radar based on a single antenna, may be a centimeter wave radar or a submillimeter wave radar, or may be an imaging radar. This is not limited herein.

The millimeter wave radar is used as an example. The millimeter wave radar works on a millimeter wave band (a wavelength is 1 mm to 10 mm), and a working frequency is usually selected from a range of 30 GHz to 300 GHz. A wavelength of a millimeter wave is between a centimeter wave and an optical wave. Therefore, the millimeter wave has advantages of both microwave guidance and photoelectric guidance. Compared with a centimeter wave seeker, a millimeter wave seeker is characterized by a small size, light weight, and high spatial resolution. Due to features such as a small size and light weight of the millimeter wave radar, use scenarios that other sensor radars such as infrared, laser, ultrasonic, and a camera do not have in a vehicle-mounted application are well compensated for

Each radar sensor may only send a signal, or only receive a signal, or send a signal and receive a signal. The radar sensor may be mounted on a measurement apparatus such as a motor vehicle (such as an unmanned vehicle, an intelligent vehicle, an electric vehicle, or a digital vehicle), an unmanned aerial vehicle, a rail car, a bicycle, a signal lamp, a speed measurement apparatus, or a network device (such as a base station or a terminal device in various systems). In embodiments of this application, the radar may be mounted on a mobile device, for example, mounted on a vehicle as a vehicle-mounted radar, or may be mounted on a fixed device, for example, mounted on a device such as a roadside unit (road side unit, RSU). This is not limited in embodiments of this application. It should be understood that the radar may be also referred to as a radar apparatus, or may be referred to as a detector, a radar apparatus, or a radar signal sending apparatus. A name of the radar is not limited in embodiments of this application. For ease of description, the apparatuses are collectively referred to as a radar in this specification. A working principle of the radar is to send a transmit signal and receive a reflected signal obtained after the transmit signal is reflected by a target, to detect the corresponding target. For a specific process, refer to descriptions in a conventional technology. Details are not described herein.

(3) Point cloud data is a set of a group of vectors in a three-dimensional coordinate system. These vectors are generally represented in a form of XYZ three-dimensional coordinates, and are generally mainly used to represent a shape of an outer surface of an object. In addition to geometric location information represented by (X, Y, Z), the point cloud data may further represent an RGB color, a gray value, depth, a segmentation result, and the like of a point. The point cloud data in embodiments of this application may be obtained by the radar sensor

(4) A positioning target may be any target for which a distance and/or a speed need/needs to be measured, and may be a moving object, or may be a static object.

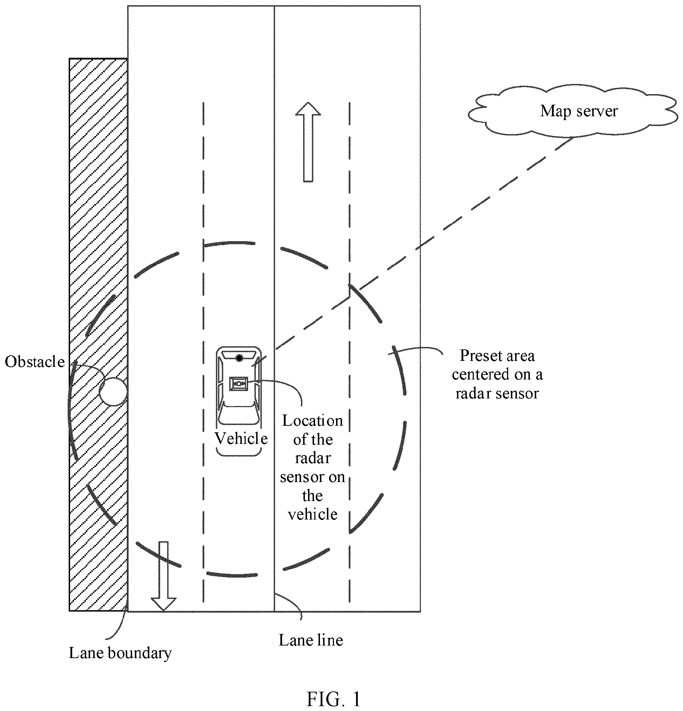

A high-precision map construction method and a vehicle positioning method according to embodiments of this application are further described below with reference to the accompanying drawings. FIG. 1 is a schematic diagram of an application scenario according to an embodiment of this application. Indication information of a traveling direction in a lane shown in FIG. 1 includes four lanes. Traveling directions in two lanes on a left side are consistent, and vehicle traveling directions in two lanes on a right side are consistent. Any vehicle may be an intelligent vehicle or a non-intelligent vehicle. This is not limited in this embodiment of this application. A sensor is disposed on the vehicle, and the sensor is configured to detect a target around the vehicle, such as an obstacle, a lane boundary, or a lane line. The sensor includes a laser radar, a millimeter wave radar, and a camera. For ease of description, the lane line mentioned in this application may be a lane line on which a protrusion component is disposed on a road surface or another apparatus that can be detected by a radar sensor is disposed. Therefore, the radar sensor may detect a location and a range of the lane line based on the protrusion component or the another apparatus. Further, an attribute of the lane line may be determined based on information about a lane that is stored in a navigation map. For example, the lane line is a solid line or a dashed line, and the lane line is a single line or double lines.

In addition, one or more sensors may be disposed on each vehicle, and there may be one or more sensors of each type. The sensor may be mounted on the top of the vehicle, and may be specifically disposed at a middle location on the top of the vehicle. A location at which the sensor is mounted on each vehicle and a quantity of sensors on each vehicle are not limited in this embodiment of this application. In this embodiment of this application, the vehicle may communicate with another object based on a wireless communication technology between the vehicle and the outside (such as vehicle to everything (V2X)). For example, communication between vehicles may be implemented based on a vehicle to vehicle wireless communication technology (such as vehicle to vehicle (V2V)). The vehicle may communicate with another object based on wireless fidelity (such as wireless fidelity (Wi-Fi)), a fifth generation (5th generation, 5G) mobile communication technology, and the like. For example, communication between a vehicle and an intelligent device (such as a smartphone or a mobile device that supports a positioning function) may be implemented based on 5G.

The application scenario shown in FIG. 1 may further include a map server on the cloud, and the map server may be implemented by a server or a virtual machine on the cloud. In the scenario shown in FIG. 1, for example, the sensor is a radar sensor, and a measurement apparatus is a vehicle. A preset area of the sensor of the vehicle is an area that is shown by a dashed-line circle in FIG. 1 and that centers on the vehicle and uses a preset distance as a radius. The preset distance may be a value less than or equal to a radius of a coverage area of a radar signal sent by a vehicle A. Radar feature information of a target within a preset range may be determined by using the sensor of the vehicle, so that a radar feature layer may be constructed in a high-precision map based on positioning information of the vehicle and radar polarization information collected by the sensor of the vehicle, and is used to determine a positioned location that is of the vehicle and that is corresponding to the radar feature information, to position and navigate the vehicle when global navigation satellite system (global navigation satellite system, GNSS) positioning fails. A procedure of determining radar polarization information of the target by using a millimeter wave radar may include the following steps.

Step 1: A waveform generator (waveform generation) in the radar generates a transmit signal, and then transmits the transmit signal by using a transmit antenna (transmit antenna). The transmit signal is usually a linear modulation signal with a carrier frequency, and an expression of the transmit signal $s_T(t)$ may be:

$$s_T(t) = cos\left[2\pi\left(f_T t \pm \frac{B_{sw}}{T_{CPI}}\frac{t^2}{2}\right)\right] \quad (1)$$

$f_T$ represents the carrier frequency, $B_{sw}$ represents bandwidth of the transmit signal, and $T_{CPI}$ represents duration of the transmit signal.

Step 2: The transmit signal is received by a receive antenna (receive antenna) after being reflected by an obstacle, and a received signal is a delay signal of the transmit signal. An expression of the delay signal $s_R(t)$ of the transmit signal is:

$$s_R(t) = s_T[t - \tau(t)] \quad (2)$$

$\tau(t)$ indicates a delay of the transmit signal from being sent by the transmit antenna to being reflected by the obstacle to being received by the receive antenna.

Step 3: Perform frequency mixing/down-conversion (down-conversion) on the delay signal of the transmit signal and the transmit signal, and then obtain the received signal through sampling (sampling).

The received signal is a signal formed after an antenna of the radar receives a part of reflected energy (or echo scattering) reflected by different ground objects. A distance between the target (a ground object) and the radar may be determined by using a difference between transmitting time of the transmit signal and receiving time of echo scattering of different ground objects, to determine a location of the target.

The millimeter wave radar detects the target, to obtain a distance between a moving target and the radar sensor and a speed of the moving target. If the millimeter wave radar is disposed on the vehicle and the target is another vehicle, information such as a vehicle speed of the target vehicle relative to the current vehicle and a relative vehicle location, a relative distance, and an azimuth of the target vehicle relative to the current vehicle may be determined based on an echo signal collected by the radar.

Further, radar cross section (radar cross section, RCS) information of the target may be obtained by using the received signal, and the RCS information may be used to describe a backward scattering feature of the target under the action of the radar. An RCS sequence of a spatial target is related to factors such as a shape structure of the target, a frequency of an electromagnetic wave, a polarization form of an incident field, a polarization form of the receive antenna, and an angular location (a posture angle) of the target for a direction of an incoming wave. For a same measurement radar, a frequency of an electromagnetic wave, a polarization form of an incident field, a polarization form of a receive antenna, and an angular location (a posture angle) of a target for a direction of an incoming wave may be determined. Therefore, a relationship may be established between an RCS average of the target and both a target structure and a target posture. In a map scenario, a target posture in space is generally relatively stable, and a plurality of measurement results of a spatial target RCS are stable. Therefore, the RCS average of the target may be used as a feature for identifying a structure of the target, so that reflection intensity categories of different targets can be obtained, and structures of the targets are classified. For example, it may be determined whether the target is a lane boundary, a lane line, a road edge, an obstacle on a road, a tunnel, a bridge, or the like.

In addition, the transmit signal may include polarization information, and polarization reflects a rule in which an electric field vector end point of a wave varies with time. There may be linear polarization, circular polarization, elliptical polarization, left-hand polarization, and right-hand polarization based on a rotation direction and a shape of a spatial track formed through polarization. A polarization status of the electromagnetic wave reflects a time-varying characteristic of an electric field orientation of the electromagnetic wave received by the radar Polarization parameter estimation may be performed on the received signal by using a receive end that is a polarization antenna or a polarization-sensitive array. In a possible implementation, the transmit signal may be in a horizontal polarization (H) manner or a vertical polarization (V) manner. A received signal (echo scattering) received by the antenna may also be in a horizontal or vertical polarization manner, or echo scattering in two manners may be received. In the two polarization states, H represents a horizontal manner and V represents a vertical manner. Therefore, there may be four combinations of transmitting and receiving manners: HH: Horizontal transmitting and horizontal receiving; VV: Vertical transmitting and vertical receiving; HV: Horizontal transmitting and vertical receiving; and VH: Vertical transmitting and horizontal receiving. Based on different polarization manners of transmitting and receiving, the transmit signal interacts with the target, and echo scattering is also different. Both a wavelength and a polarization manner affect an obtained received signal. Therefore, the polarization information in the received signal may include a polarization scattering matrix of the target and a polarization state of the electromagnetic wave. The polarization scattering matrix of the target is a polarization scattering effect of the target on an electromagnetic wave at a specific posture and an observed frequency. The polarization scattering matrix includes a complex scattering coefficient S corresponding to the target when a transmit end/a receive end respectively uses horizontal/vertical polarization.

$$S = \begin{bmatrix} S_{\mathrm{HH}} & S_{\mathrm{HV}} \\ S_{\mathrm{VH}} & S_{\mathrm{VV}} \end{bmatrix}$$

The polarization scattering matrix of the target represents a change caused by a radar target to a polarization state of a signal of the electromagnetic wave; in other words, the target is irradiated by the electromagnetic wave of the radar, and a polarization state of a scattered electromagnetic wave may be different from a polarization state of an incident electromagnetic wave. Changing the polarization state of the electromagnetic wave by using the target may be referred to as a depolarization feature of the target. In this case, the radar target changes a polarization state of the electromagnetic wave, and a change of the polarization state is determined by a shape, a structure, and a material of the target. Therefore, the target may be identified by using polarization information in a target echo signal. In other words, scattering features of different targets may be obtained based on the polarization information, and the polarization information may be used to mark feature information such as a surface feature, a shape, and roughness of the target. Further, a combination of different polarization manners and wavelengths may be used to determine different and complementary polarization information of the target, to obtain more accurate feature information such as a structure and a material of the target.

Based on this, a high-precision map designed in this embodiment of this application is a high-precision map that is constructed after a radar feature layer is added to a conventional navigation map and that has relatively high precision of identifying a target and a lane boundary. To further improve precision of the map, a virtual lane boundary or a virtual lane line may be further determined based on a lane boundary determined based on the radar feature layer, to improve navigation accuracy.

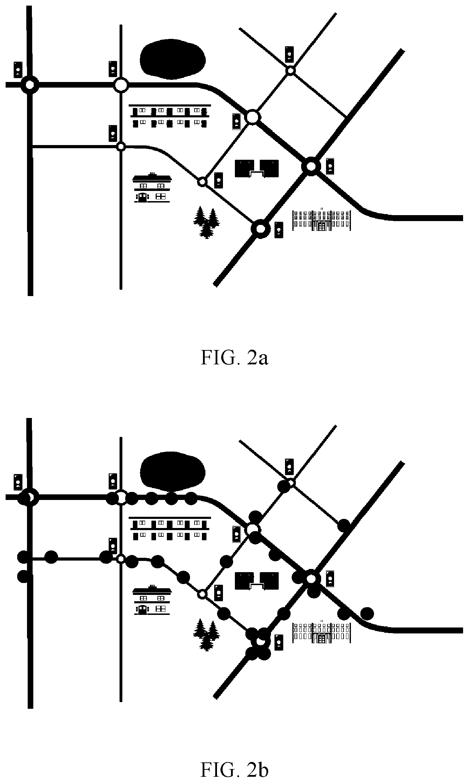

FIG. 2a is a schematic diagram of a conventional navigation map. A navigation map is the conventional navigation map, and navigation and positioning are performed by using a GNSS device. Compared with a high-precision map, the conventional navigation map can provide only road-level navigation information. The navigation map may provide navigation information for a user to meet a navigation requirement on a driving route. For example, the navigation map may provide navigation information such as a quantity of lanes on a current road, speed limit information, turning information, and route planning. In this solution, due to impact from precision of GNSS positioning, in terms of vehicle positioning precision, the vehicle can only be located on a road, and it is difficult to determine a lane in which the vehicle is specifically located. Therefore, it is difficult to provide lane-level navigation information. In addition, in a scenario such as a shadeway, a city canyon, or a tunnel, drifting is easily caused during GNSS positioning, and in addition, there is a specific probability that a positioning signal of a GNSS cannot be obtained. Consequently, the vehicle cannot be navigated.

As shown in FIG. 2b, a radar feature layer is added to the conventional navigation map. Various targets in the map may be identified by using the radar feature layer, to match, by identifying a target in a vehicle traveling environment, radar feature information of a target that is collected at a location of a vehicle. In this way, a current positioned location of the vehicle is determined based on positioning information that is corresponding to the matched radar feature information and that is stored in the radar feature layer, to provide accurate navigation information in different vehicle traveling environments, especially in a scenario in which GNSS positioning is inaccurate.

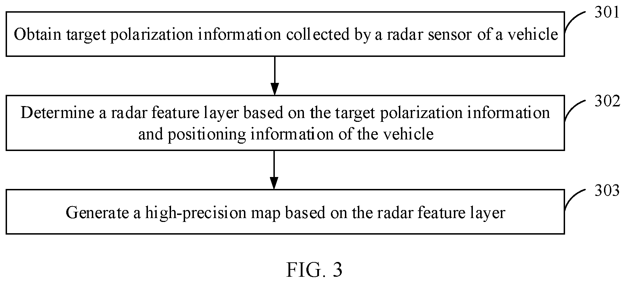

As shown in FIG. 3, specific steps of a high-precision map construction method provided in this application are described below. The high-precision map construction method provided in this application may be performed by a vehicle, another measurement apparatus with a radar sensor, or a server on the cloud. For example, a measurement apparatus with a radar sensor, such as a vehicle, collects radar feature information of a target and location information of the measurement apparatus, and sends the radar feature information and the location information of the measurement apparatus to a map server on the cloud. The map server on the cloud determines a correspondence between the radar feature information and the location information of the measurement apparatus, and constructs a high-precision map. A manner of updating the high-precision map may also be performed by the measurement apparatus or the server on the cloud. A process of generating a radar feature layer is specifically described below, and includes the following steps.

Step 301: Obtain target polarization information collected by the radar sensor of the measurement apparatus, where the target polarization information is used to describe target boundary information and target attribute information.

In step 301, a target in a road environment may be detected by the radar sensor of the measurement apparatus, a transmit signal may be sent to the target, and RCS information and polarization information in an echo signal received by a receive antenna of the measurement apparatus are obtained based on the echo signal.

In a possible implementation, the RCS information and the polarization information in the echo signal may be stored in an imaging manner; in other words, imaging information may be generated based on the echo signal. The imaging information may be understood as a reflection of the target to the transmit signal, and is mainly image information formed through backward scattering of the target. The imaging information may include a plurality of types of information, such as the RCS information, phase information, amplitude information, and the polarization information in the echo signal. A possible implementation of generating the imaging information based on the echo signal reflected by the target is as follows: After the echo signal is received, the echo signal is processed, for example, down-conversion and analog-to-digital conversion are performed on the echo signal, and then the imaging information may be obtained by using a synthetic aperture radar (synthetic aperture radar, SAR) imaging algorithm based on a signal obtained through processing. In a possible implementation, the imaging information may be stored in a form of point cloud data. The point cloud data may include radar feature information such as a distance, an azimuth, a pitch angle, and a target speed of the target. The point cloud data is shown in FIG. 2b by using a solid dot. The radar feature layer may provide an accurate instruction for a vehicle in a traveling scenario. For example, in a scenario in which a GNSS cannot be used for positioning, for example, when there is no lane mark or in a tunnel, positioning is provided for the vehicle and a passable road is provided for the vehicle. Optionally, to further improve precision of a map, a virtual lane line layer may be further added to a navigation map. A virtual lane line may be generated based on a lane boundary generated based on the radar feature layer, and is used to indicate a drivable lane on a road with no lane line mark. For example, the virtual lane line may be a virtual curve connecting an entry intersection lane and an exit intersection lane, or may be considered as a reference track on which the vehicle travels in an intersection area, or may be a road under construction, a road on which a lane line is covered in different environments, a tunnel, or the like.

In a possible implementation, target RCS information and the target polarization information are determined based on the RCS information and the polarization information in the echo signal.

In a specific implementation process, the target may be classified and identified based on the RCS information and the polarization information in the echo signal, to determine a boundary feature of the target and a material feature of the target, so that the target RCS information and the target polarization information are determined. For example, a specific target classification and identification method may be determined based on a precision requirement and a road environment requirement. A manner a1 and a manner a2 are used as examples for description.

Manner a1: Targets may be classified based on the RCS information in the echo signal.

For example, if the precision requirement is relatively low or a road environment is relatively simple, structures of the targets may be classified by using information such as an average value and a transient statistical feature in the RCS information. For example, the targets may be classified into targets such as a lane and an obstacle based on the structures of the targets.

Alternatively, a moving target and a static target may be determined based on the RCS information. Specifically, target Doppler information collected by the radar sensor is obtained, polarization information of a static target in the target polarization information is determined based on the target Doppler information, and the radar feature layer is determined based on the polarization information of the static target and positioning information of the measurement apparatus. Alternatively, a non-static object may be determined based on the target Doppler information, and target polarization information of the non-static object is deleted from the target polarization information based on the non-static object.

The target Doppler information may be obtained from the RCS information. A relative speed of the target relative to the radar sensor is determined based on the obtained target Doppler information, and a moving speed of the target is determined based on a speed of the vehicle and the relative speed of the target relative to the radar sensor. Further, the targets may be classified into a non-static target and a static target. Because it is difficult to use the non-static target as a target for positioning the vehicle, only target RCS information and target polarization information of the static target may be reserved, to construct the radar feature layer.

Manner a2: Targets may be classified based on the RCS information and the polarization information in the echo signal.

For example, if the precision requirement is relatively high, or a road environment is relatively complex, boundaries or materials of the targets may be classified and identified based on an indicator such as a determinant of a scattering matrix in the polarization information, a trace of the scattering matrix, a depolarization coefficient of the scattering matrix, and intrinsic polarization as polarization feature vectors.

In a possible implementation, boundary information of the road may be obtained based on imaging information generated based on the RCS information and the polarization information, and reflection power and reflection ratios of objects of different materials to different polarization of the radar are different. Then, a material type of the road boundary may be determined through classification by using transmit power and a reflection difference of polarization, to obtain a more accurate road boundary feature. Road boundary material information, road surface material information, and the like of a current lane environment may be obtained by using the polarization information of the radar, to obtain a more accurate road boundary feature, including boundaries of roads made of different materials, material information on the road, and the like.

Further, the targets may be further classified based on attributes of the targets. For example, if the targets are distinguished based on a lane and a non-lane, the boundary information of the target may be a key point or a line used to describe boundary information of an obstacle on the road, or is boundary information used to describe a lane. For example, lanes may be classified into a plurality of targets based on boundaries of the lanes, and types of a target boundary may include but are not limited to any one or more of the following: a lane line, a road edge, an obstacle on the road, or the like. The lanes may be classified into a single lane, double lines, a plurality of lanes, a start lane, a middle lane, a merging lane, a diverging lane, and an intersection. The start lane may be a lane corresponding to several lane lines that include a start point on a road. A boundary of a start-end lane may be a start line of the lane. An end lane may be a lane corresponding to several lane lines that include an end point on a road. A boundary of the end lane is a stop line of the lane. Generally, in actual application, a start line of a lane and a stop line of a reverse lane are on a same straight line. The merging lane and the diverging lane may be marked by using lane changing points in the lanes. The lane changing point may be a diverging point generated when a turning lane is added when some roads are to reach an intersection, or may be a merging point generated when lanes are decreased by one when the vehicle enters a new road through an intersection, or may be a bifurcation of an exit lane of an expressway/elevated bridge, or a merging point of entry lanes of an expressway/elevated bridge. The lanes may be further classified based on obstacles in the lanes. For example, the lanes may further include a tunnel lane, an elevated bridge entry lane, an elevated bridge exit lane, and a bridge.

To further classify and identify the targets, identification may be performed based on a one-dimensional distance image or a two-dimensional SAR/ISAR image with reference to the polarization information. During classification and identification of the one-dimensional distance image, identification may be performed by using a dynamic change of an echo polarization feature with time domain information, frequency domain information, and joint domain information and a transient polarization feature or a scattering center feature. In the two-dimensional SAR/ISAR image, mathematical transform such as polarization target decomposition is performed on a target polarization scattering matrix, and a target feature used for classification and identification, such as the boundary feature of the target and a material feature of the target, may be further extracted.

In different road environments, for example, when there is an obstruction (such as fallen leaves) or when there is accumulated water or accumulated snow, a polarization feature of the obstruction on the target, the accumulated water, or the accumulated snow may be determined based on the polarization information of the echo signal, to determine a boundary feature and a material feature of the obstruction on the target, the accumulated water, or the accumulated snow, so that impact on the echo signal of the target in a condition in which there is the obstruction, impact on the echo signal of the target in a condition in which there is the accumulated water, or impact on the echo signal of the target in a condition in which there is the accumulated snow is determined, and more accurate boundary information of the target after a cover is removed is determined.

For example, when the lane is covered by the obstruction, a road mark such as a lane line or a lane boundary may be covered. In this case, the obstruction may be removed based on the polarization feature of the obstruction, the accumulated water, or the accumulated snow, to improve accuracy of determining the boundary information of the lane.

In another possible manner, a boundary of the target may be changed in different road environments. For example, on a road surface with accumulated water, due to an area of the accumulated water, a passable road may change, so that a material feature of the accumulated water on the road and a material feature of a lane may be determined based on the polarization information in the echo signal, whether there is accumulated water in the lane is identified, and a boundary feature of the accumulated water and the boundary feature of the road are further determined, to determine boundary information of the road in a road condition with the accumulated water, to guide navigation planning.

For example, if the area of the accumulated water occupies one lane, polarization information of an echo signal detected in the lane corresponds to a polarization feature (such as a boundary feature of the accumulated water or a material feature of the accumulated water) of the lane with the accumulated water, and polarization information generated in another lane corresponds to a polarization feature (such as a boundary feature of the accumulated water or a material feature of the accumulated water) of a lane with no accumulated water. Therefore, it may be determined that the lane is covered by the accumulated water, and the another lane is passable.

It should be noted that each example of target classification is merely an example, and a type of the target may include another type or may be another type. This is not limited in this application.

In a possible implementation, radar feature information of the target may be determined based on the target polarization information and positioning information of the vehicle.

Further, the radar feature information of the target may alternatively be determined based on target RCS information, the target polarization information, and the positioning information of the measurement apparatus. A specific determining manner may be determined based on content of the radar feature information.

The positioning information of the vehicle may be a point coordinate value of the vehicle in a GNSS coordinate system, and is geographical coordinates of the vehicle. The positioning information of the vehicle may further include posture information of the vehicle. There are many methods for determining the positioning information of the vehicle. For example, the positioning information of the vehicle may be determined only by using the vehicle in a global positioning system (global positioning system, GPS), or may be a positioned location of the vehicle that is determined by using a posture sensor with reference to a GNSS. This is not limited herein. Further, the positioning information of the vehicle may further include speed information and acceleration information of the vehicle. The speed information and the acceleration information may be determined by using data collected by the posture sensor. The posture sensor may include a three-dimensional accelerometer, a magnetic sensor, a gyroscope, and the like. This is not limited in this application.

The radar feature information of the target may include one or more of the following: an identity (identity document, ID) of the radar sensor, positioning information of the radar sensor, an identity ID of the target, target RCS information, target polarization information, a sequence number of a lane in which the target is located, a type of the target, or attribute information of the target. The attribute information of the target may include target boundary information, target attribute information, and the like. For example, the target boundary information includes at least one of the following: boundary information of a road in different environments, boundary information of road clearance in different environments, or boundary information of a roadside object in different environments. The target attribute information may include at least one of the following: material information of a road boundary in different environments, material information of a road net height in different environments, or material information of a roadside object in different environments. Further, the target attribute information may further include the positioning information of the target. The positioning information of the target may be a point coordinate value of the target in the GNSS coordinate system, or may be an ID of a road in a navigation map onto which the target is mapped, and is geographical coordinates of the target. There are many methods for determining the positioning information of the target. For example, if the target is a roadside obstacle, a location of each target may be collected by using a manual marking method. If the target is a vehicle on the road, the positioning information may be determined by using sensor information collected by another vehicle on the road on the target vehicle. Alternatively, relative locations of the target and the radar sensor may be determined by using a positioned location of a vehicle in which the radar sensor is located and based on target RCS information obtained by the radar sensor, to determine a location of the target. An example of the radar feature information (or information about the radar feature layer) of the target may be shown in Table 1.

**Table 1**

| Information name | Meaning |
|---|---|
| Radar sensor_ID | Globally unique ID |
| Positioning information of a radar sensor | May be a mesh identity mesh ID of a mesh in which the radar sensor is located, or may be a coordinate location of the radar sensor |
| Road_ID | Road ID associated with a target |
| Target type | 0: Road<br>1: Obstacle<br>2: Clearance |
| Attribute information of a target 1 | Road boundary information such as a start point, an end point, and curvature of a road boundary<br>Coordinates of a road edge<br>Length of the road boundary<br>Road boundary segment, for example, the road boundary segment may include a single lane, double lanes, a merging lane, and a diverging lane<br>Material information of the road boundary, for example, an asphalt road, a cement road, a lane line, an updated lane line, a road with an obstruction, a road with accumulated water, or a road with accumulated snow |
| Attribute information of a target 2 | Boundary information of an obstacle, for example, a tunnel-bridge on a road, a height limit bar, a street lamp on an edge of the road, and boundary information of a building beside the road<br>Material information of the obstacle |

As shown in Table 1, an identity of the radar sensor may be used to indicate a globally unique ID of the radar sensor on the map server, and is used to distinguish different radar sensors. For example, positioning information, target RCS information, and target polarization information collected by different types of radar sensors have different precision. The map server may aggregate, based on different precision and weights, radar feature information that is of the target and that is collected by the radar sensors, to improve precision of the radar feature information. The ID may also be denoted as id. The mesh_ID (mesh_ID) is used to indicate an ID of a grid, in a conventional navigation map, to which a location of the radar sensor is mapped, to distinguish different grids, and to establish a mapping relationship between the location of the radar sensor and the grid in the navigation map. The mesh_ID is derived from an attribute of a road line in the conventional navigation map. The grid is an attribute in the conventional navigation map, and is used to determine a location in the navigation map.

The road_ID (road_ID) is used to indicate an ID of a road, in the conventional navigation map, on which the target is mapped, and is used to classify different targets into different roads and establish a mapping relationship between the target and a road in the navigation map. The road_ID may be derived from an attribute of a route in the conventional navigation map.

The target type may be used to identify a target category, and different types may be indicated by different sequence numbers, index numbers, or IDs. For example, the targets may be classified into three types based on the structures of the targets. For example, 0 indicates that the target is a road, 1 indicates that the target is an obstacle, and 2 indicates that the target is a clearance area. The clearance area may be a clearance area formed above a road in a scenario in which height and width are limited, such as a tunnel or a bridge. Further, when the target is a clearance area, the boundary information of the target may be information corresponding to a boundary generated by the tunnel in the clearance area above the road. Certainly, the targets may be alternatively classified in another manner.

The attribute information of the target may be further sub-division based on the target type. For example, the attribute information of the target 1 may be attribute information of a road, and may include: a start point and an end point of a road boundary and coordinates of a road edge; a length of a road boundary; and a composition of a road boundary segment, for example, the road boundary segment may include a single lane, double lanes, a merging lane, and a diverging lane. The road boundary segment may be further identified by a lane sequence number or a lane line sequence, and the lane sequence number or the lane line sequence (lane _num) is used to indicate a sequence number of a lane in which the target is located and is used to distinguish different lane lines. For example, a two-way road includes a forward lane and a reverse lane. Sequence numbers [-n, ..., -1] represent an $n^{th}$ reverse lane to a first reverse lane, [0] represents a central lane line, and sequence numbers [1, ..., n] represent a first forward lane to an $n^{th}$ forward lane. For a one-way road, sequence numbers [0, ..., n] may be used to represent a $0^{th}$ forward lane to an $n^{th}$ forward lane. The merging lane or the diverging lane may be further indicated by using different sequence numbers, index numbers, or IDs. For example, -1 is used to indicate that a lane changing point sub-type is that a quantity of lanes is decreased, and 1 is used to indicate that a lane changing point sub-type is that a quantity of lanes is increased; and -1 is used to indicate that a lane start-end point sub-type is a lane start point, and 1 is used to indicate that a lane start-end point sub-type is a lane end point.

Material compositions of the road boundary are, for example, a cobbled road, an unsurfaced road, an asphalt road, a cement road, a lane line, a cancelled lane line, a road with fallen leaves, a road with accumulated water, or a road with accumulated snow. A lane line on the road may be determined based on a material feature that is corresponding to the lane line on the road and that is determined based on the polarization information collected by the radar sensor, and a direction of the lane line is determined based on a category attribute of a material of the lane line, such as a yellow lane line or a white lane line. An attribute of the lane is determined by using whether the lane line is a solid line or a dashed line. In addition, in a possible scenario, due to a change of the lane line, there may also be an updated lane line on a road surface. For example, an updated lane is determined in a manner of adding a lane or subtracting a lane. A manner of determining the updated lane may be: determining the updated lane by identifying a newly added fence on the road, a temporary traffic cone, or the like. Therefore, the updated lane line on the road may be determined based on the collected polarization information of the road, to guide navigation in the high-precision map.

The attribute information of the target 2 may be attribute information of an obstacle on a road or on a road edge, such as boundary information of the obstacle, such as a tunnel-bridge on the road, a height limit bar, a street lamp on an edge of the road, and boundary information of a building beside the road; and material information of the obstacle, such as a tunnel-bridge, a height limit bar, a street lamp on an edge of the road, and material information of a building beside the road. Further, the material information of the obstacle may further include material information of the obstacle in different weather conditions, such as material information of a surface of the obstacle in a scenario in which there are fallen leaves, accumulated water, accumulated snow, or the like.

Further, to reduce a quantity of stored high-precision maps, when there is no coverage in a same target type, the radar feature information of the target is radar feature information 0, and in a specific coverage degree, a target surface is basically a material of a cover. Therefore, only radar feature information of a corresponding material may be reserved. For example, when there is accumulated snow, there is accumulated snow on a target surface, and radar feature information of the accumulated snow is radar feature information 1. When a coverage area of fallen leaves reaches a specific range, there are fallen leaves on the target surface, and radar feature information of the fallen leaves is radar feature information 2. Only radar feature information of a cover such as rainwater, snow, or fallen leaves may be stored, and radar feature information of each target under the cover does not need to be stored, to reduce the quantity of stored high-precision maps.

Step 302: Construct a radar feature layer based on the target polarization information and the positioning information of the measurement apparatus.

Specifically, the radar feature layer may be constructed by a processor of the measurement apparatus based on the radar feature information of the target, or the measurement apparatus may report the target polarization information and the positioning information of the measurement apparatus to the map server, so that the map server constructs the radar feature layer based on the radar feature information of the target. This is not limited herein.

Step 303: Construct a high-precision map based on the radar feature layer

The navigation map may be used to provide road-level navigation information, and the high-precision map may be used to provide lane-level navigation information. A mapping relationship or association information between positioning information of the radar sensor and a navigation map layer is established based on the positioning information of the radar sensor and the radar feature information of the target, to generate the radar feature layer. In other words, the radar feature information of the target is correspondingly stored in the radar feature layer based on the positioning information of the radar sensor by using the mapping relationship between the positioning information of the radar sensor and the navigation map layer; or the radar feature information of the target and the positioning information that is of the radar sensor and that is corresponding to the radar feature information of the target are correspondingly stored at a location in a map in which the target is located. This is not limited herein.

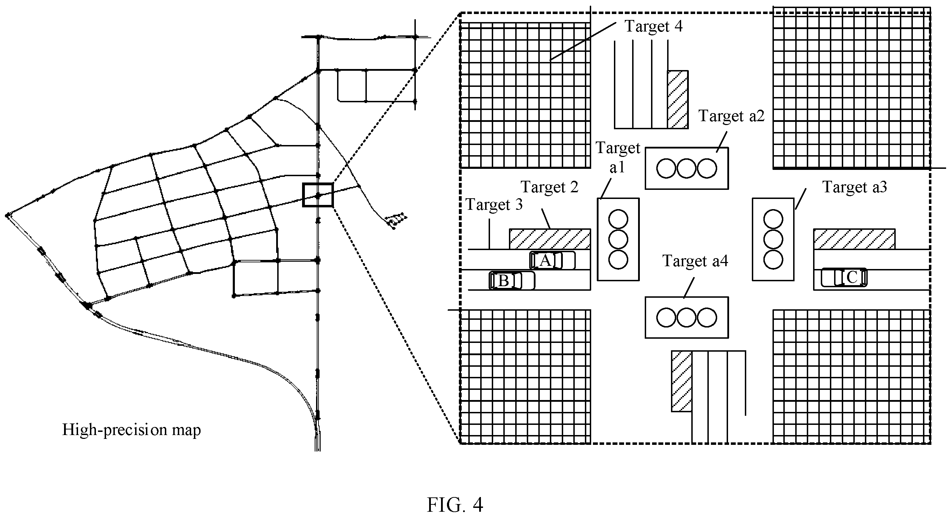

The high-precision map may be stored in a form of a map file (such as a shapefile), and the map file is a spatial data open format, is geometrical information and attribute information for describing spatial data, and is a file used to store a geographic element. A map file of the radar feature layer mainly includes the foregoing obtained radar feature layer, and includes the geometrical information and the radar feature information. The geometrical information may be spatial coordinates of the radar sensor, or may be spatial coordinates of the target. The attribute information is radar feature information of the radar feature layer. In a possible implementation, in this embodiment of this application, a map file may be generated from geographic information (including a location) and attribute information of each layer by using a geospatial data abstraction library (geospatial data abstraction library, GDAL). The GDAL is an open source raster spatial data conversion library used for data conversion and processing. A finally generated map file is shown in FIG. 4, and a high-precision map and an enlarged local map of an intersection are shown. A bottom layer is a conventional navigation map, and a solid point is the radar feature layer. Radar feature information of the target 1, the target 2, a target 3, and a target 4 may be stored in the radar feature layer. A target a1 is a traffic light directly above (or behind) a vehicle A. In a corresponding radar feature layer, radar feature information of the target a1 that is collected by the vehicle is stored at a positioned location 1 of the vehicle A. A target a3 is a traffic light right ahead the vehicle A. In a corresponding radar feature layer, radar feature information of the target a3 that is collected by the vehicle is stored at the positioned location 1 of the vehicle A. A target a2 is a traffic light on a front left side of the vehicle A. In a corresponding radar feature layer, radar feature information of the target a2 that is collected by the vehicle is stored at the positioned location 1 of the vehicle A. A target a4 is a traffic light on a front right side of the vehicle. In a corresponding radar feature layer, radar feature information of the target a3 that is collected by the vehicle is stored at the positioned location 1 of the vehicle A.

The target 2 is an obstacle on a left side of the vehicle A. If the vehicle A collects radar feature information of the target 2, the radar feature information of the target 2 may be further stored at the corresponding positioned location 1 of the vehicle A in the radar feature layer. Correspondingly, the target 3 is a lane line. Target polarization information of the target 3 on the road may be determined based on different materials on the road that are determined based on polarization information collected by a radar sensor of the vehicle A. Therefore, radar feature information of the target 3 (for example, the target 3 is a lane line) may be further stored at the corresponding positioned location 1 of the vehicle A. The target 4 is another obstacle such as a roadside building. Radar feature information of the target 4 (for example, a target type is an obstacle) may be determined based on target polarization information of the target 4 that is collected by a radar of the vehicle A. The radar feature information of the target 4 may be further stored at the corresponding positioned location 1 of the vehicle A.

Similarly, a vehicle B may collect the radar feature information of the target a1, the radar feature information of the target a2, the radar feature information of the target a3, the radar feature information of the target a4, the radar feature information of the target 2, the radar feature information of the target 3, and the radar feature information of the target 4 at a positioned location 2. A vehicle C may collect the radar feature information of the target a1, the radar feature information of the target a2, the radar feature information of the target a3, the radar feature information of the target a4, the radar feature information of the target 2, radar feature information of the target 3, and radar feature information of the target 4 at a positioned location 3.

To improve precision of the radar feature layer, if a plurality of pieces of radar feature information of the target are determined by a plurality of radar sensors, or a plurality of pieces of radar feature information of the target are determined by the radar sensor at different moments, the plurality of pieces of radar feature information may be processed to determine more reliable radar feature information of the target to construct the radar feature layer. A manner b1 and a manner b2 are used as examples below for description.

Manner b 1: The RCS information and the polarization information collected by the radar may be screened based on precision of the target RCS information and the target polarization information that are collected by the radar. For example, screening may be performed based on angle measurement accuracy, power, and the like of the target RCS information collected by the radar, to filter out target RCS information and target polarization information that are less than a preset threshold.

In a possible implementation, the radar feature layer is determined based on target polarization information that is collected by the radar sensor and whose characteristic value is greater than a first characteristic threshold. In another possible implementation, the radar feature layer may alternatively be determined based on target RCS information that is collected by the radar sensor and whose target RCS information is greater than a second characteristic threshold and target polarization information whose characteristic value is greater than a first characteristic threshold. The characteristic value includes at least one of the following: a distance, a horizontal angle, a pitch angle, target Doppler information, target reflected power, angle measurement accuracy, or the like.

Specifically, the target RCS information and the target polarization information that are collected by the radar may be screened by the radar sensor, so that target RCS information and target polarization information that are less than the preset threshold are not used to construct the radar feature layer, to improve precision of the radar feature layer. Alternatively, after the radar sensor determines to report the radar feature information to the map server, the map server screens the radar feature information based on the preset threshold, and uses radar feature information obtained through screening as the radar feature information in the constructed radar feature layer

With reference to the foregoing examples, if it is determined that precision of radar feature information collected by the vehicle C is less than the preset threshold, the radar feature information collected by the vehicle C is not added to the radar feature layer; if it is determined that precision of radar feature information collected by the vehicle A is greater than the preset threshold, the radar feature information collected by the vehicle A may be added to the radar feature layer; and if it is determined that precision of radar feature information collected by the vehicle B is greater than the preset threshold, the radar feature information collected by the vehicle B may be added to the radar feature layer.

Manner b2: Radar feature information of a same target that is collected by different measurement devices at a same positioned location is aggregated, to determine the radar feature information of the target. For example, when the target is a road, the radar feature information of the target includes road boundary information, road attribute information, and the like, and road boundary information collected by a plurality of measurement apparatuses may be separately aggregated, to determine more reliable road boundary information. Aggregation processing may alternatively be performed by using road attribute information collected by a plurality of measurement apparatuses, to determine more reliable road attribute information. Certainly, joint processing may also be performed. To be specific, road boundary information and road attribute information that are collected by a plurality of measurement apparatuses are aggregated, to determine more reliable road boundary information and more reliable road attribute information. In a possible implementation, the radar feature information of the target may be generated through weighting. The target boundary information is used as an example. A weight of each piece of target boundary information is determined based on each piece of target boundary information and positioning information of a corresponding measurement apparatus, and target boundary information at a map location corresponding to the positioning information is determined in the radar feature layer based on the weight and the target boundary information. Correspondingly, the target attribute information may also use a same weighting manner, and a weight of each piece of target attribute information is determined based on a plurality of pieces of target attribute information and a corresponding measurement apparatus, and target attribute information at a map location corresponding to the positioning information is determined in the radar feature layer based on the weight and the target attribute information.

For example, different weights may be set for radar feature information determined by different radar sensors. For example, a relatively large weight is set for a specified radar sensor used for testing, and a relatively small weight is set for another radar sensor.

With reference to the foregoing examples, if it is determined that a weight of a radar sensor of the vehicle A is a and a weight of a radar sensor of the vehicle B is b, the target a1 is used as an example. The radar feature information corresponding to the target a1 may be determined after radar feature information 01 collected by the vehicle A at the positioned location 1 and radar feature information 101 collected by the vehicle B at the positioned location 2 are weighted, and correspondingly, a positioned location corresponding to the weighted radar feature information may also be determined after the positioned location 1 and the positioned location 2 are weighted.

For example, if the radar sensor used for testing is an inertial measurement unit (inertial measurement unit, IMU), point cloud accumulation may be performed based on multi-frame radar feature information of the target (such as speed information of the target, boundary information of the target, and polarization information) that is output by the IMU, to obtain clearer radar feature information of the target. For another example, a relatively large weight may be set for radar feature information obtained when a target environment condition is relatively good, and a relatively small weight may be set for radar feature information obtained when a target environment condition is relatively poor, to obtain boundary information of the target without environmental impact. Certainly, weights corresponding to the radar feature information of the target in different weather conditions may alternatively be set additionally, to match a target in a special weather condition.

The radar feature layer is added to a layer of the conventional navigation map. The map on which the radar feature layer is superposed uses a radar layer. Compared with an existing high-precision map, precision of target recognition is improved, and this helps improve navigation accuracy of the high-precision map, and can provide a more precise positioning and navigation service for the vehicle than the conventional navigation map.

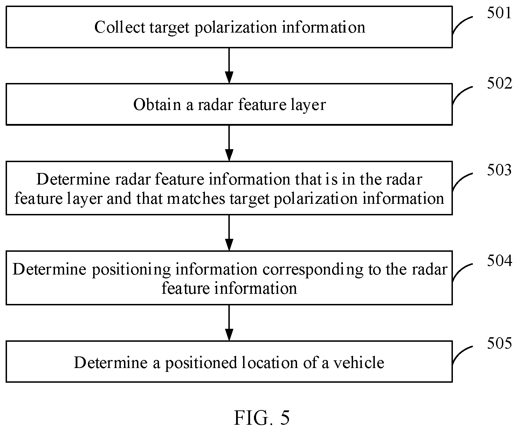

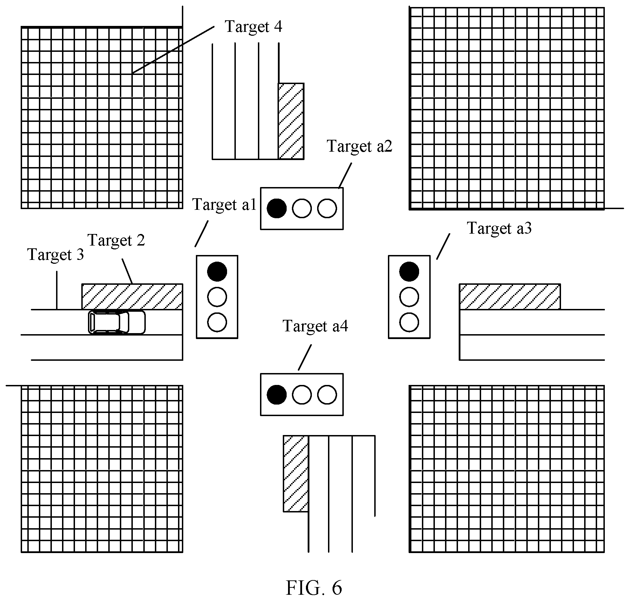

A positioning method provided in an embodiment of this application is described below. In this method, a positioned location of a vehicle may be determined when a GNSS cannot be used for positioning. The positioning method provided in this application may be performed by a vehicle or a map server. A radar sensor is disposed on the vehicle, and is configured to collect target RCS information and target polarization information in an environment in which the vehicle is located. A high-precision map may be stored in the vehicle, or may be stored in a map server on the cloud. For example, the radar sensor of the vehicle collects radar feature information of a target, and the map server on the cloud or the high-precision map stored in the vehicle obtains a radar feature layer, to position a current location of the vehicle. As shown in FIG. 5, specific steps of the positioning method are described as follows. The following descriptions may be provided below with reference to a schematic diagram shown in FIG. 6.

Step 501: A radar sensor of a vehicle collects target polarization information of a current location of the vehicle.

The target polarization information is used to describe target boundary information, target attribute information of a road, and the like.

In a specific implementation process, a vehicle-mounted radar sensor may be configured to collect target polarization information of a target in a preset area at the location of the vehicle. For example, RCS information and polarization information that are collected by a radar may be read in sequence in units of frames based on an interface of a vehicle-mounted millimeter wave radar sensor. A quantity N of image frames may be set to 0 based on an environment in which the vehicle is located, and N may be determined based on complexity of the environment or a vehicle speed of the vehicle.

Step 502: Obtain a radar feature layer of a high-precision map.

In step 502, the vehicle may obtain the radar feature layer of the high-precision map. In this case, the radar feature layer of the high-precision map may be pre-stored in the vehicle, or may be sent to the vehicle by a map server. This is not limited herein.

Alternatively, in step 502, a map server may obtain the radar feature layer of the high-precision map. In this case, the radar feature layer of the high-precision map may be pre-stored in the map server, or may be sent to the map server by the vehicle. This is not limited herein.

Step 503: Determine, based on the radar feature layer and target polarization information that is collected on a road on which the vehicle currently travels, radar feature information that is in the radar feature layer and that matches the target polarization information.

Step 504: Determine, based on the radar feature information that is in the radar feature layer and that matches the target polarization information, positioning information corresponding to the radar feature information.

It should be noted that step 503 and step 504 may be performed by the map server, or may be performed by the vehicle. This is not limited herein.

Positioning information of the vehicle may be determined based on feature matching in a plurality of solutions. That the vehicle performs a manner c1 and a manner c2 is used as an example below for description. For a manner performed by the map server, refer to this example. Details are not described herein.

Manner c 1: A target-based matching solution, such as a same road boundary or same road clearance, is used to determine the current location of the vehicle.

After obtaining target polarization information and target RCS information that are collected by a current radar, the vehicle determines radar feature information of a corresponding target, to determine a boundary feature and a material feature of the target, and then matches the boundary feature and the material feature of the target with the radar feature information in the radar feature layer. If matching succeeds, the vehicle may be positioned by using positioning information corresponding to the matched radar feature information.

For example, as shown in FIG. 6, the vehicle may determine radar feature information 1 of a target a1, radar feature information 2 of a target a2, and radar feature information 3 of a target a3 from RCS information and polarization information that are collected at the current location. The radar feature information stored in the radar feature layer in the high-precision map is used. For example, radar feature information collected by a vehicle A at a positioned location 1 in FIG. 4 is used as an example. At the positioned location 1, determined radar feature information of the target a1 is radar feature information 01, determined radar feature information of the target a2 is radar feature information 02, and determined radar feature information of the target a3 is radar feature information 03. Therefore, a matching process may be: matching the radar feature information 01 with the radar feature information 1, matching the radar feature information 02 with the radar feature information 2, and matching the radar feature information 03 with the radar feature information 3. If it is determined that matching values of the three times of matching are greater than a preset threshold, it may be determined that the current location of the vehicle is the positioned location 1.

Further, to improve positioning accuracy, a plurality of pieces of radar feature information of the target that are stored in the radar feature layer may be matched with radar feature information of the target that is collected by the vehicle at the current location. The target a1 is used as an example. If the radar feature information of the target a1 includes weighted radar feature information collected by three radar sensors, a positioned location corresponding to the target a1 in the radar feature layer may also be determined by weighting three corresponding positioned locations when the three radar sensors collect the radar feature information. Certainly, the three corresponding positioned locations when the three radar sensors collect the radar feature information may alternatively be separately stored to perform feature matching. For example, it is determined that radar feature information of the target a1 that is collected by the three radar sensors is radar feature information A, radar feature information B, and radar feature information C. It is assumed that during matching of radar feature information of the target that is collected by the vehicle at the current location, a probability of feature matching of the radar feature information B is the largest. In this case, a positioned location corresponding to the radar feature information B may be used as a current positioned location of the vehicle. Certainly, alternatively, weighted radar feature information may be matched with the radar feature information of the target that is collected by the vehicle at the current location, to determine whether a matching probability is greater than a matching threshold. If it is determined that the matching probability is greater than the matching threshold, three positioned locations corresponding to weighted radar feature information collected by the three radar sensors are used as current positioned locations of the vehicle.

It should be noted that the foregoing is only an example. In an actual matching process, a feature matching quantity and a feature matching manner are not limited.

Further, in consideration of a case in which a target surface may be covered by fallen leaves, accumulated water, or accumulated snow in different environments, measured target polarization information of the target is correspondingly different, and matching of the radar feature information of the target is affected. Therefore, impact on the radar feature information of the target that is caused when the target surface may be covered by an obstruction such as fallen leaves, accumulated water, or accumulated snow may be eliminated by using RCS information of the target and target polarization information of the target. This helps improve a probability that target polarization information collected by the vehicle at the current location matches the radar feature information in the high-precision map, so that a positioning effect is improved.

In a scenario in which the target is covered by fallen leaves, feature matching may be performed in the following manners.

Manner A1: It is determined, based on an environment in which the target is located, that the target is covered by fallen leaves; a boundary feature of a part that is of the target and that is not covered by the fallen leaves is determined based on the target polarization information and radar feature information in an environment with fallen leaves in the radar feature layer; and the boundary feature of the part that is of the target and that is not covered by the fallen leaves is matched with radar feature information an object in the radar feature layer.

Manner A2: It is determined, based on an environment in which the target is located, that the target is covered by fallen leaves; and a boundary feature of the target in the target polarization information is matched with radar feature information in an environment with fallen leaves in the radar feature layer.

In a scenario in which the target is covered by accumulated water or accumulated snow, feature matching may be performed in the following manners.

Manner B 1: It is determined, based on an environment in which the target is located, that the target is in an environment with coverage of rainwater/snow; a boundary feature of a part that is of the target and that is not covered by rainwater/snow is determined based on the target polarization information and radar feature information in the environment with rainwater/snow in the radar feature layer; and the boundary feature of the part that is of the target and that is not covered by the rainwater/snow is matched with the radar feature information in the radar feature layer.

Manner B2: It is determined, based on an environment in which the target is located, that the target is in an environment with coverage of rainwater, and a boundary feature of the target covered by rainwater is matched with radar feature information in the environment with coverage of rainwater in the radar feature layer; or it is determined, based on an environment in which the target is located, that the target is in an environment with coverage of snow, and a boundary feature of the target covered by snow is matched with radar feature information in the environment with coverage of snow in the radar feature layer.

A specific implementation is described below by using an example, and details are not described herein.

Manner c2: RCS information and polarization information that are collected by the vehicle at the current location may be matched with the radar feature information stored in the radar feature layer, to determine matched radar feature information, and further, positioning information corresponding to the matched radar feature information is used as a current positioned location of the vehicle.

For example, if the radar feature information stored in the radar feature layer also includes the RCS information and the polarization information that are collected by the radar sensor, for example, as shown in FIG. 1, after collecting RCS information and polarization information in an echo signal in a preset range, the vehicle may store characteristic values (such as reflection strength or reflection strength distribution in the echo signal) in the RCS information and the polarization information in the radar feature layer as radar feature information. Specifically, the characteristic values may be stored in attribute information corresponding to a positioned location of the vehicle based on the positioned location. Therefore, the vehicle may determine, based on the RCS information and the polarization information that are collected by the vehicle at the current location, a characteristic value corresponding to the current location, and perform matching with characteristic values of the RCS information and the polarization information in the radar feature layer. If it is determined that a matching probability is greater than a preset threshold, it may be considered that the RCS information and the polarization information that are collected by the vehicle at the current location match the radar feature information in the radar feature layer. In this way, positioning information corresponding to the radar feature information is used as a current positioned location of the vehicle.

Step 505: Determine a positioned location of the vehicle based on the positioning information corresponding to the radar feature information.

Step 505 may be performed by the vehicle, or may be performed by the map server, so that the map server sends the positioned location of the vehicle to the vehicle after determining the positioned location of the vehicle to guide navigation of the vehicle.

In a possible implementation, the vehicle may perform route planning based on the determined positioned location and posture sensor information of the vehicle with reference to road boundary information in the high-precision map, so that positioning and navigation with relatively high precision may also be implemented for a special scenario, such as a tunnel scenario or a curve scenario.

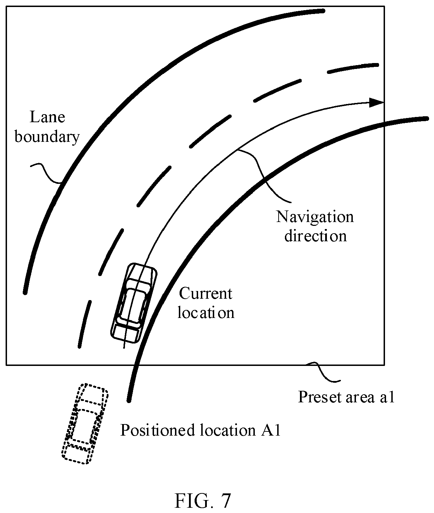

A specific scenario is used as an example below for description. FIG. 7 shows a navigation scenario for turning on a curve in a scenario with no lane line. The following steps are included.

Step 701: A radar sensor of a vehicle collects target polarization information of a current location of the vehicle.

In this scenario, a target may be a road A, and the target polarization information may be used to determine material information of the road A (for example, a material of the road A is a material of an asphalt road) and material information of a non-road beside the road A, to distinguish a boundary of the road A. As shown in FIG. 7, it may be determined that the boundary of the road A is a curve when the radar sensor collects the target polarization information of the current location of the vehicle.

Step 702: Obtain a radar feature layer of a high-precision map.

In step 702, an area that the vehicle may reach may be determined based on previous positioning information of the vehicle. For example, as shown in FIG. 7, positioning information obtained by the vehicle at a latest moment is a location A1. Therefore, a preset area a may be determined based on the location A1, to obtain a radar feature layer corresponding to the area a that the vehicle may currently reach, and the radar feature layer is used to match the target polarization information collected by the radar sensor at the current location of the vehicle.

Step 703: Determine, based on the radar feature layer and target polarization information that is collected on a road on which the vehicle currently travels, radar feature information that is in the radar feature layer and that matches the target polarization information.

The radar feature information in the radar feature layer of the high-precision map is matched with the target polarization information collected by the radar sensor at the current location of the vehicle, so that it may be determined that the radar feature information of the target is radar feature information corresponding to a lane boundary and a positioned location corresponding to the radar feature information of the target is a positioned location B1.

Step 704: Determine, based on the radar feature information that is in the radar feature layer and that matches the target polarization information, positioning information corresponding to the radar feature information.

Specifically, the determined positioned location B 1 may be used as the current location of the vehicle. Further, because radar feature information corresponding to a lane boundary of a road ahead of the vehicle is determined, a virtual lane line of the lane boundary may be established based on the radar feature information corresponding to the lane boundary, so that the virtual lane line is used as navigation information of the vehicle to guide traveling of the vehicle, to avoid a potential risk caused if the vehicle travels into a non-lane area when traveling on a road with no lane line.

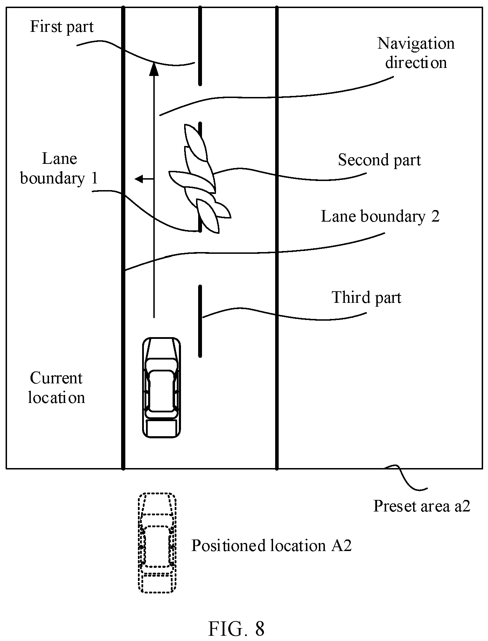

A specific scenario is used as an example below for description. FIG. 8 shows a navigation scenario in which a lane line is covered by an obstruction (such as fallen leaves). The following steps are included.

Step 801: A radar sensor of a vehicle collects target polarization information of a current location of the vehicle.

In this scenario, a target may be a road A, and the target polarization information may be used to determine material information of a lane line 1 on the road A (for example, a material of the lane line 1 on the road A is a material 1) and material information of an obstruction on the road A. As shown in FIG. 8, when the radar sensor collects the target polarization information of the current location of the vehicle, it may be determined that the lane line 1 on the road A is currently a lane line covered by the obstruction.

Step 802: Obtain a radar feature layer of a high-precision map.

In step 802, an area that the vehicle may reach may be determined based on previous positioning information of the vehicle. For example, as shown in FIG. 8, positioning information obtained by the vehicle at a latest moment is a location A2. Therefore, a preset area a may be determined based on the location A2, to obtain a radar feature layer corresponding to the area a that the vehicle may currently reach, and the radar feature layer is used to match the target polarization information collected by the radar sensor at the current location of the vehicle. The radar feature layer may include radar feature information of a road in an environment with an obstruction. For example, as shown in FIG. 8, radar feature information on a lane boundary 1 includes radar feature information with no coverage of the obstruction and radar feature information with coverage of the obstruction, and radar feature information on a lane boundary 2 includes radar feature information with no coverage of the obstruction and radar feature information with coverage of the obstruction. In another possible manner, radar feature information on a lane boundary 1 includes radar feature information with no coverage of the obstruction, radar feature information on a lane boundary 2 includes radar feature information with no coverage of the obstruction, and radar feature information when the lane is covered by the obstruction is separately stored.

Step 803: Determine, based on the radar feature layer and target polarization information that is collected on a road on which the vehicle currently travels, radar feature information that is in the radar feature layer and that matches the target polarization information.

In a possible implementation, a boundary feature of a part that is of the target and that is not covered by the obstruction is determined based on the target polarization information and radar feature information in an environment with the obstruction in the radar feature layer, and the boundary feature of the part that is of the target and that is not covered by the obstruction is matched with radar feature information of an object in the radar feature layer.

It is determined, based on a material feature corresponding to the obstruction in target polarization information corresponding to the lane boundary 1, that the lane boundary 1 is covered by the obstruction. In the target polarization information, a boundary feature of a part that is of the lane boundary 1 and that is not covered by the obstruction is determined. For example, only a boundary of the part that is of the lane boundary 1 and that is not covered by the obstruction may be matched with radar feature information (such as lane boundary information and lane material information) of a lane in the radar feature layer, to avoid impact caused by the obstruction to lane feature matching. As shown in FIG. 8, the obstruction divides the lane boundary 1 into three parts. A first part and a third part are not covered by the obstruction, and a second part is covered by the obstruction. In this case, target polarization information corresponding to the first part and the third part may be matched with radar feature information of a lane line in the radar feature layer.

In a possible implementation, a boundary feature of the target in the target polarization information is matched with radar feature information in an environment with an obstruction in the radar feature layer.

Specifically, it is determined, based on that a material feature corresponding to the obstruction exists in the target polarization information corresponding to the lane boundary 1, that the lane boundary 1 is covered by the obstruction. Obtained radar feature information of a lane line that is in an area a2 and that is covered by the obstruction is matched with the target polarization information that is of the lane boundary 1 and that is collected by the vehicle; and when a matching probability is greater than a preset threshold, it is determined that the lane boundary 1 corresponds to matched radar feature information 802 that is of a lane line 1 covered by the obstruction and that is in the radar feature layer. Further, a boundary feature, corresponding to the radar feature information 802, of a lane boundary 1 that is not covered by the obstruction and that is in radar feature information 8020 of the lane boundary 1 is determined based on the radar feature information 802, and radar feature information that is of a part, of the lane boundary 1, covered by the obstruction and that is collected by the vehicle at a current location is removed based on the boundary feature of the lane boundary 1 in the radar feature information 8020, and radar feature information of the part that is of the lane boundary 1 and that is covered by the obstruction may also be supplemented.

The radar feature information in the radar feature layer of the high-precision map is matched with target polarization information collected by the radar sensor at the current location of the vehicle, so that it may be determined that the radar feature information of the target is radar feature information corresponding to the lane boundary 1 and a positioned location corresponding to the radar feature information of the lane boundary 1 is a positioned location B2.

Step 804: Determine, based on the radar feature information that is in the radar feature layer and that matches the target polarization information, positioning information corresponding to the radar feature information.

Specifically, the determined positioned location B2 may be used as the current location of the vehicle. Further, because radar feature information corresponding to a lane boundary of a road ahead of the vehicle is determined, a virtual lane line of the lane boundary may be established based on the radar feature information corresponding to the lane boundary, so that the virtual lane line is used as navigation information of the vehicle to guide traveling of the vehicle, to avoid a potential risk caused if the vehicle travels into a lane area when traveling on a road on which a lane line is covered.

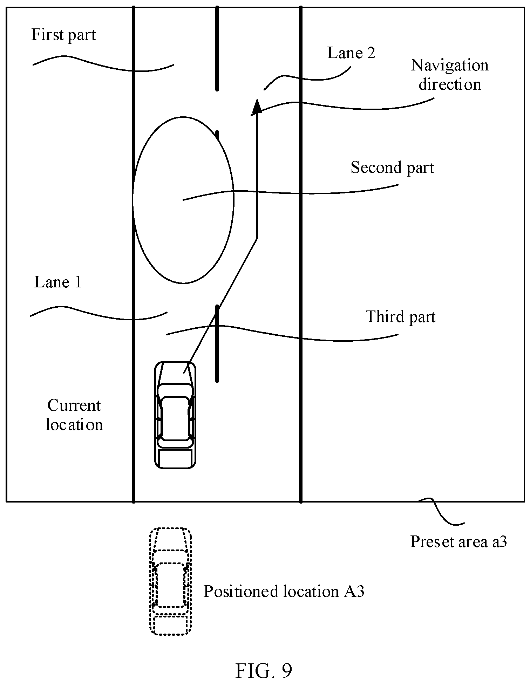

A specific scenario is used as an example below for description. FIG. 9 shows a navigation scenario in which there is accumulated water on a road surface. The following steps are included.

Step 901: A radar sensor of a vehicle collects target polarization information of a current location of the vehicle.

In this scenario, a target may be a road A3, and the target polarization information may be used to determine material information of a lane 1 on the road A3. For example, a material of an area 1 (located in the lane 1) of the road A3 is water, and a material of a lane 2 is a road surface material 1. As shown in FIG. 9, when the radar sensor collects the target polarization information of the current location of the vehicle, it may be determined that the lane 1 on the road A3 is currently a lane covered by accumulated water, and the lane 2 is a lane that is not covered by accumulated water.

Step 902: Obtain a radar feature layer of a high-precision map.

In step 902, an area that the vehicle may reach may be determined based on previous positioning information of the vehicle. For example, as shown in FIG. 9, positioning information obtained by the vehicle at a latest moment is a location A3. Therefore, a preset area a3 may be determined based on the location A3, to obtain a radar feature layer corresponding to the area a3 that the vehicle may currently reach, and the radar feature layer is used to match the target polarization information collected by the radar sensor at the current location of the vehicle. The radar feature layer may include radar feature information of a road in an environment with accumulated water. As shown in FIG. 9, radar feature information in the lane 1 includes radar feature information with no coverage of accumulated water and radar feature information with coverage of accumulated water, and radar feature information in the lane 2 includes radar feature information with no coverage of accumulated water and radar feature information with coverage of accumulated water. In another possible manner, radar feature information in the lane 1 includes radar feature information with no coverage of accumulated water, radar feature information in the lane 2 includes radar feature information with no coverage of accumulated water, and radar feature information when the lane is covered by accumulated water is separately stored.

Step 903: Determine, based on the radar feature layer and target polarization information that is collected on a road on which the vehicle currently travels, radar feature information that is in the radar feature layer and that matches the target polarization information.

In a possible implementation, a boundary feature of a part that is of the target and that is not covered by accumulated water is determined based on the target polarization information and radar feature information in an environment with accumulated water in the radar feature layer, and the boundary feature of the part that is of the target and that is not covered by the accumulated water is matched with radar feature information of an object in the radar feature layer.

It is determined, based on that a material feature corresponding to rainwater exists in target polarization information corresponding to the lane 1, that the lane 1 is covered by accumulated water. In the target polarization information, a boundary feature of a part that is of the lane 1 and that is not covered by the accumulated water is determined. For example, only a boundary of the part that is of the lane 1 and that is not covered by the accumulated water may be matched with radar feature information (such as boundary information and material information) of a lane in the radar feature layer, to avoid impact caused by the rainwater to lane feature matching. As shown in FIG. 8, coverage of the accumulated water divides a lane line into three parts. A first part and a third part are not covered by the accumulated water, and a second part is covered by the accumulated water. In this case, target polarization information corresponding to the first part and the third part may be matched with radar feature information of a lane in the radar feature layer

In another possible implementation, a boundary feature of the target in the target polarization information is matched with radar feature information in an environment with accumulated water in the radar feature layer.

Specifically, it is determined, based on that a material feature corresponding to rainwater exists in target polarization information corresponding to a lane line 1, that the lane line 1 is covered by accumulated water. Obtained radar feature information of a lane that is in an area a3 and that is covered by the accumulated water is matched with the target polarization information that is of the lane 1 and that is collected by the vehicle; and when a matching probability is greater than a preset threshold, it is determined that the lane 1 corresponds to matched radar feature information 902 that is of the lane 1 covered by the accumulated water and that is in the radar feature layer. Further, a boundary feature, corresponding to the radar feature information 902, of a lane line 1 that is not covered by accumulated water and that is in radar feature information 9020 of the lane 1 is determined based on the radar feature information 902, and radar feature information that is of a part, of the lane 1, covered by the accumulated water and that is collected by the vehicle at the current location is removed based on the boundary feature of the lane line 1 in the radar feature information 9020, and the radar feature information of the part that is of the lane 1 and that is covered by the accumulated water may also be supplemented.

The radar feature information in the radar feature layer of the high-precision map is matched with the target polarization information collected by the radar sensor at the current location of the vehicle, so that it may be determined that the radar feature information of the target is radar feature information corresponding to the lane 1 and a positioned location corresponding to the radar feature information of the lane 1 is a positioned location B3.

Step 904: Determine, based on the radar feature information that is in the radar feature layer and that matches the target polarization information, positioning information corresponding to the radar feature information.

Specifically, the determined positioned location B3 may be used as the current location of the vehicle. Further, because radar feature information corresponding to a lane boundary of a road ahead of the vehicle is determined, a virtual lane line of the lane boundary may be established based on the radar feature information corresponding to the lane boundary, so that the virtual lane line is used as navigation information of the vehicle to guide traveling of the vehicle, such as a navigation direction shown in FIG. 9, to avoid a potential risk caused if the vehicle travels into a lane area with accumulated water when traveling on a road on which a lane is covered by the accumulated water.

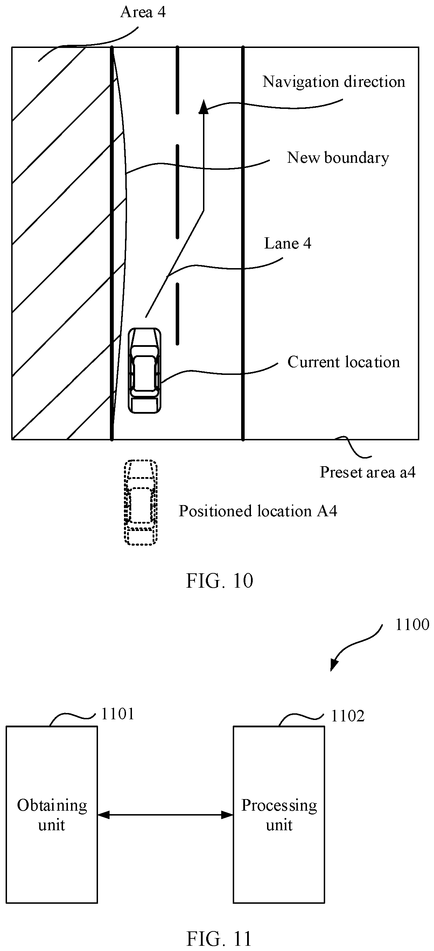

A specific scenario is used as an example below for description. FIG. 10 shows a navigation scenario with accumulated snow. The following steps are included.

Step 1001: A radar sensor of a vehicle collects target polarization information of a current location of the vehicle.

In this scenario, a target may be a road A4, and the target polarization information may be used to determine a lane 4 on the road A4 and material information of a nearby area. For example, a material of an area 4 beside the road A4 is snow, and a material of the lane 4 is a road surface material 1. As shown in FIG. 10, when the radar sensor collects the target polarization information of the current location of the vehicle, it may be determined that the area 4 beside the road A3 is an area covered by accumulated snow, and the lane 4 is a lane that is not covered by accumulated snow, but a boundary part of the lane 4 is covered by accumulated snow.

Step 1002: Obtain a radar feature layer of a high-precision map.

In step 1002, an area that the vehicle may reach may be determined based on previous positioning information of the vehicle. For example, as shown in FIG. 10, positioning information obtained by the vehicle at a latest moment is a location A4. Therefore, a preset area a4 may be determined based on the location A4, to obtain a radar feature layer corresponding to the area a4 that the vehicle may currently reach, and the radar feature layer is used to match the target polarization information collected by the radar sensor at the current location of the vehicle. The radar feature layer may include radar feature information of a road in an environment with accumulated snow. As shown in FIG. 10, the radar feature information in the lane 4 includes radar feature information with no coverage of accumulated snow and radar feature information with coverage of accumulated snow, and radar feature information in the area 4 includes radar feature information with no coverage of accumulated snow and radar feature information with coverage of accumulated snow.

In another possible manner, radar feature information in the lane 4 includes radar feature information with no coverage of accumulated water, radar feature information in the area 4 includes radar feature information with no coverage of accumulated snow, and radar feature information when the lane is covered by accumulated snow is separately stored.

Step 1003: Determine, based on the radar feature layer and target polarization information that is collected on a road on which the vehicle currently travels, radar feature information that is in the radar feature layer and that matches the target polarization information.

In a possible implementation, a boundary feature of a part that is of the target and that is not covered by accumulated snow is determined based on the target polarization information and radar feature information in an environment with accumulated snow in the radar feature layer, and the boundary feature of the part that is of the target and that is not covered by the accumulated snow is matched with radar feature information of an object in the radar feature layer.

It is determined, based on that a material feature corresponding to ice/snow exists in the target polarization information corresponding to the lane 1, that the area 4 is covered by the accumulated snow. In the target polarization information, a boundary feature of a part that is of the lane 4 and that is not covered by the accumulated snow is determined. For example, only a boundary of the part that is of the lane 1 and that is not covered by the accumulated snow may be matched with radar feature information (such as boundary information and material information) of a lane in the radar feature layer, to avoid impact caused by rainwater/snow to lane feature matching. As shown in FIG. 8, coverage of the accumulated snow re-defines a boundary for the lane and the area 4, a part of the lane is not covered by the accumulated snow, and the other part of the lane is covered by the accumulated snow. In this case, target polarization information corresponding to the part that is of the lane and that is not covered by the accumulated snow may be matched with radar feature information of a lane in the radar feature layer.

In another possible implementation, a boundary feature of the target in the target polarization information is matched with radar feature information in an environment with accumulated water in the radar feature layer.

Specifically, it is determined, based on that a material feature corresponding to ice/snow exists in the target polarization information corresponding to the lane line 1, that the area 4 or the lane 4 is covered by accumulated snow. Obtained radar feature information of a lane that is in an area a4 and that is covered by the accumulated snow is matched with target polarization information that is of the lane 4 or the area 4 and that is collected by the vehicle; and when a matching probability is greater than a preset threshold, it is determined that the lane 4 or the area 4 corresponds to matched radar feature information 1002 that is of the lane 4 or the area 4 covered by the accumulated snow and that is in the radar feature layer. Further, a boundary feature, corresponding to the radar feature information 1002, of a lane 4 or an area 4 that is not covered by the accumulated snow and that is in radar feature information 10020 of the lane 4 or the area 4 is determined based on the radar feature information 1002, and radar feature information that is of a part, of the lane 4 or the area 4, covered by the accumulated snow and that is collected by the vehicle at a current location is removed based on the boundary feature of the lane 4 or the area 4 in the radar feature information 10020, and radar feature information of the part that is of the lane 4 or the area 4 and that is covered by the accumulated snow may also be supplemented.

The radar feature information in the radar feature layer of the high-precision map is matched with target polarization information collected by the radar sensor at the current location of the vehicle, so that it may be determined that the radar feature information of the target is radar feature information corresponding to the lane 4 or the area 4 and a positioned location corresponding to the radar feature information of the lane 4 or the area 4 is a positioned location B4.

Step 1004: Determine, based on the radar feature information that is in the radar feature layer and that matches the target polarization information, positioning information corresponding to the radar feature information.

Specifically, the determined positioned location B4 may be used as the current location of the vehicle. Further, because radar feature information corresponding to a lane boundary of a road ahead of the vehicle is determined, a virtual lane line of the lane boundary may be established based on the radar feature information corresponding to the lane boundary, so that the virtual lane line is used as a new lane boundary (such as a new lane boundary shown in FIG. 10), to be used as navigation information of the vehicle to guide traveling of the vehicle, such as a navigation direction shown in FIG. 10, to avoid a potential risk caused if the vehicle travels into a lane area with accumulated snow when traveling on a road on which a lane is covered by accumulated water.

Based on the foregoing method embodiments, an embodiment of this application further provides a high-precision map generation apparatus, and the high-precision map generation apparatus may be configured to implement a high-precision map generation function in FIG. 3. As shown in FIG. 11, the navigation apparatus 1100 includes an obtaining unit 1101 and a processing unit 1102. Functions and connections of units of the high-precision map generation apparatus 1100 when generating a high-precision map are described below.

The obtaining unit 1101 is configured to obtain target polarization information collected by a radar sensor of a measurement apparatus. The target polarization information is used to describe target boundary information and target attribute information.

The processing unit 1102 is configured to: determine a radar feature layer based on the target polarization information and positioning information of the measurement apparatus; and generate a high-precision map based on the radar feature layer

In a possible implementation, the obtaining unit 1101 is further configured to obtain polarization information that is of an echo signal and that is collected by the radar sensor of the measurement apparatus.

The processing unit 1102 is further configured to: determine a boundary feature of the target and a material feature of the target based on the polarization information; and determine the target polarization information based on the boundary feature of the target and the material feature of the target.

In a possible implementation, the obtaining unit 1101 is specifically configured to obtain target Doppler information collected by the radar sensor of the measurement apparatus.

The processing unit 1102 is specifically configured to: determine polarization information of a static target in the target polarization information based on the target Doppler information; and determine the radar feature layer based on the polarization information of the static target and positioning information of the measurement apparatus.

In a possible implementation, the target boundary information includes at least one of the following: boundary information of a road in different environments, boundary information of road clearance in different environments, or boundary information of a roadside object in different environments, and the target attribute information includes at least one of the following: material information of a road boundary in different environments, material information of a road net height in different environments, or material information of a roadside object in different environments.

In a possible implementation, the processing unit 1102 is further configured to determine the radar feature layer based on the positioning information of the measurement apparatus and target polarization information that is in the target polarization information collected by the radar sensor and whose characteristic value is greater than a first characteristic threshold. The characteristic value includes at least one of the following: a distance, a horizontal angle, a pitch angle, target Doppler information, target reflected power, or angle measurement accuracy.

In a possible implementation, the processing unit 1102 is further configured to: determine a weight of the target polarization information based on the target polarization information and the positioning information of the measurement apparatus, and determine, based on the weight and the target polarization information, radar feature information that is in the radar feature layer and that is at a map location corresponding to the positioning information. The radar feature information at the map location is used to provide positioning information for a vehicle.

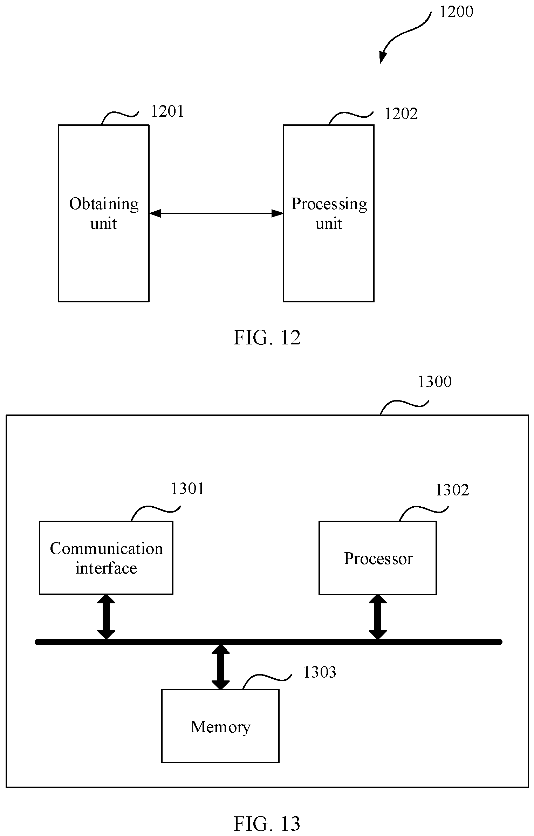

Based on the foregoing method embodiments, an embodiment of this application further provides a positioning apparatus. The positioning apparatus is configured to implement a positioning function in FIG. 5. The positioning apparatus may be a map server or a chip disposed on the map server, a vehicle with a radar sensor, or a chip disposed on the vehicle with a radar sensor. As shown in FIG. 12, a positioning apparatus 1200 includes an obtaining unit 1201 and a processing unit 1202. Functions and connections of units of the positioning apparatus 1200 during vehicle positioning are described below.

The obtaining unit 1201 is configured to: obtain target polarization information collected by a radar sensor of a vehicle on a road on which the vehicle currently travels, where the target polarization information is used to describe target boundary information and target attribute information; and obtain a radar feature layer of a high-precision map

The processing unit 1202 is configured to: determine, based on the radar feature layer and the target polarization information collected on the road on which the vehicle currently travels, radar feature information that is in the radar feature layer and that matches the target polarization information; determine, based on the radar feature information, positioning information corresponding to the radar feature information; and determine a location of the vehicle based on the positioning information.

In a possible implementation, the obtaining unit 1201 is specifically configured to obtain polarization information that is of an echo signal and that is collected by the radar sensor on the road on which the vehicle currently travels.

The processing unit 1202 is specifically configured to: determine a boundary feature of the target and a material feature of the target based on the polarization information; and determine the target polarization information based on the boundary feature of the target and the material feature of the target.

In a possible implementation, the obtaining unit 1201 is further configured to obtain target Doppler information collected by the radar sensor on the road on which the vehicle currently travels.

The processing unit 1202 is further configured to: determine polarization information of a static target in the target polarization information based on the target Doppler information; and determine the radar feature information based on the polarization information of the static target and the radar feature layer

In a possible implementation, the processing unit 1202 is specifically configured to: determine, based on the target polarization information, a boundary feature and a material feature of the target that are corresponding to the target polarization information; determine, based on the material feature that is of the target and that is corresponding to the target polarization information, an environment in which the target is located; and determine, based on the boundary feature of the target and the environment in which the target is located, the radar feature information that is in the radar feature layer and that matches the target polarization information.

In a possible implementation, the processing unit 1202 is specifically configured to: determine, based on the radar feature information that is in the radar feature layer and that matches the target polarization information, road boundary information of a road on which the vehicle is located, and plan a navigation route for the vehicle based on the location of the vehicle and the road boundary information.

In a possible implementation, the radar feature layer includes radar feature information in different environments. The processing unit 1202 is specifically configured to: determine, based on the environment in which the target is located, that the target is covered by an obstruction; determine, based on the target polarization information and radar feature information in an environment with the obstruction in the radar feature layer, a boundary feature of a part that is of the target and that is not covered by the obstruction; and match, with radar feature information of an object in the radar feature layer, the boundary feature of the part that is of the target and that is not covered by the obstruction.

In a possible implementation, the radar feature layer includes radar feature information in different environments. The processing unit 1202 is specifically configured to: determine, based on the environment in which the target is located, that the target is in an environment with coverage of accumulated water/accumulated snow; determine, based on the target polarization information and radar feature information in the environment with coverage of accumulated water/accumulated snow in the radar feature layer, a boundary feature of a part that is of the target and that is not covered by the accumulated water/accumulated snow; and match, with radar feature information in the radar feature layer, the boundary feature of the part that is of the target and that is not covered by the accumulated water/accumulated snow.

In a possible implementation, the radar feature layer includes radar feature information in different environments. The processing unit 1202 is specifically configured to: determine, based on an environment in which the target is located, that the target is in an environment with coverage of accumulated water, and match, with radar feature information in the environment with coverage of accumulated water in the radar feature layer, a boundary feature of the target covered by the accumulated water; or determine, based on an environment in which the target is located, that the target is in an environment with coverage of accumulated snow, and match, with radar feature information in the environment with coverage of accumulated snow in the radar feature layer, a boundary feature of the target covered by the accumulated snow.

It should be noted that unit division in the foregoing embodiments of this application is an example, and is merely logical function division. In actual implementation, there may be another division manner. In addition, functional units in embodiments of this application may be integrated into one processing unit, or may exist alone physically, or two or more units may be integrated into one unit. Only one or more of the foregoing units may be implemented by software, hardware, firmware, or a combination thereof. The software or the firmware includes but is not limited to a computer program instruction or code, and may be executed by a hardware processor. The hardware includes but is not limited to various integrated circuits, such as a central processing unit (CPU), a digital signal processor (DSP), a field-programmable gate array (FPGA), or an application-specific integrated circuit (ASIC).

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Based on the foregoing embodiments, an embodiment of this application further provides a high-precision map generation apparatus, and the apparatus may implement a high-precision map generation function in FIG. 3. As shown in FIG. 13, a high-precision map generation apparatus 1300 includes a communication interface 1301, a processor 1302, and a memory 1303.

The communication interface 1301 is connected to the memory 1303 and the processor 1302. Optionally, the communication interface 1301, the memory 1303, and the processor 1302 may be connected to each other by using a bus. The bus may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used for representation in FIG. 13, but this does not mean that there is only one bus or only one type of bus.

The communication interface 1301 is configured to implement communication between the high-precision map generation apparatus and another component in a positioning system. For example, the communication interface 1301 may be configured to obtain target polarization information collected by a radar sensor of a measurement apparatus. The target polarization information is used to describe target boundary information and target attribute information.

The processor 1302 is configured to implement the high-precision map generation method shown in FIG. 3. In a possible implementation, the processor 1302 may be configured to: determine a radar feature layer based on the target polarization information and positioning information of the measurement apparatus, and generate a high-precision map based on the radar feature layer. For details, refer to the foregoing descriptions in the embodiment shown in FIG. 3. Details are not described herein again. Optionally, the processor 1302 may be a central processing unit (central processing unit, CPU) or another hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The function may be implemented by the processor 1302 by using hardware, or may be implemented by executing corresponding software by using hardware.

The memory 1303 is configured to store a program instruction, data, and the like. Specifically, the program instruction may include program code, and the program code includes computer operation instructions. The memory 1303 may include a random access memory (random access memory, RAM), or may be a non-volatile memory (non-volatile memory), for example, at least one magnetic disk memory. The processor 1302 executes the program stored in the memory 1303, and implements the foregoing functions by using the foregoing components, to finally implement the methods provided in the foregoing embodiments.

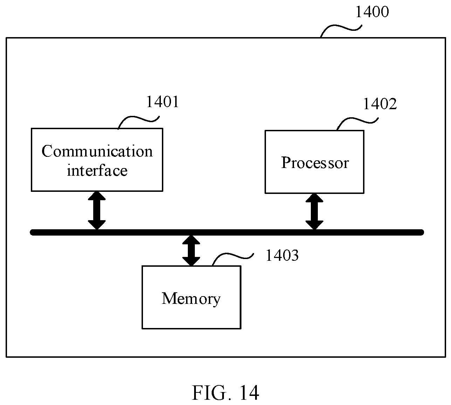

Based on the foregoing embodiments, an embodiment of this application further provides a positioning apparatus, and the apparatus may implement a positioning function in FIG. 5. As shown in FIG. 14, a positioning apparatus 1400 includes a communication interface 1401, a processor 1402, and a memory 1403.

The communication interface 1401 is connected to the memory 1403 and the processor 1402. Optionally, the communication interface 1401, the memory 1403, and the processor 1402 may be connected to each other by using a bus. The bus may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used for representation in FIG. 14, but this does not mean that there is only one bus or only one type of bus.

The communication interface 1401 is configured to implement communication between the positioning apparatus and another component in a positioning system. For example, the communication interface 1401 may be configured to: obtain target polarization information collected by a radar sensor on a road on which a vehicle currently travels, where the target polarization information is used to describe target boundary information and target attribute information; and obtain a radar feature layer of a high-precision map.

The processor 1402 is configured to implement the positioning method shown in FIG. 5. In a possible implementation, the processor 1402 may be configured to: determine, based on the radar feature layer and the target polarization information collected on the road on which the vehicle currently travels, radar feature information that is in the radar feature layer and that matches the target polarization information; determine, based on the radar feature information, positioning information corresponding to the radar feature information; and determine a location of the vehicle based on the positioning information. For details, refer to the foregoing descriptions in the embodiment shown in FIG. 5. Details are not described herein again. Optionally, the processor 1402 may be a central processing unit (central processing unit, CPU) or another hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The function may be implemented by the processor 1402 by using hardware, or may be implemented by executing corresponding software by using hardware.

The memory 1403 is configured to store a program instruction, data, and the like. Specifically, the program instruction may include program code, and the program code includes computer operation instructions. The memory 1403 may include a random access memory (random access memory, RAM), or may be a non-volatile memory (non-volatile memory), for example, at least one magnetic disk memory. The processor 1402 executes the program stored in the memory 1403, and implements the foregoing functions by using the foregoing components, to finally implement the methods provided in the foregoing embodiments.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer storage medium, the computer storage medium stores a computer program, and when the computer program is executed by a computer, the computer performs the methods provided in the foregoing embodiments.

Based on the foregoing embodiments, an embodiment of this application further provides a chip, and the chip is configured to read a computer program stored in a memory, to implement the methods provided in the foregoing embodiments.

Based on the foregoing embodiments, an embodiment of this application provides a chip system, and the chip system includes a processor, configured to support a computer apparatus in implementing a function related to the high-precision map generation apparatus and/or a function related to the positioning apparatus in the methods provided in the foregoing embodiments. In a possible design, the chip system further includes a memory, and the memory is configured to store a program and data that are used for the computer apparatus. The chip system may include a chip, or may include a chip and another discrete component.

A person skilled in the art should understand that the embodiments of this application may be provided as a method, a system, or a computer program product. Therefore, this application may use a form of a hardwareonly embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A high-precision map generation method, wherein the method comprises:

    obtaining target polarization information collected by a radar sensor of a measurement apparatus, wherein the target polarization information is used to describe target boundary information and target attribute information;
    determining a radar feature layer based on the target polarization information and positioning information of the measurement apparatus; and
    generating a high-precision map based on the radar feature layer.

2. The method according to claim 1, wherein the obtaining target polarization information collected by a radar sensor of a measurement apparatus comprises:

    obtaining polarization information that is of an echo signal and that is collected by the radar sensor of the measurement apparatus;
    determining a boundary feature of the target and a material feature of the target based on the polarization information, and
    determining the target polarization information based on the boundary feature of the target and the material feature of the target.

3. The method according to claim 1, wherein before the determining a radar feature layer based on the target polarization information and positioning information of the measurement apparatus, the method further comprises:

    obtaining target Doppler information collected by the radar sensor of the measurement apparatus; and

the determining a radar feature layer based on the target polarization information and positioning information of the measurement apparatus comprises:

determining polarization information of a static target in the target polarization information based on the target Doppler information; and
determining the radar feature layer based on the polarization information of the static target and the positioning information of the measurement apparatus.

4. The method according to any one of claims 1 to 3, wherein the target boundary information comprises at least one of the following: boundary information of a road in different environments, boundary information of road clearance in different environments, or boundary information of a roadside object in different environments, and
the target attribute information comprises at least one of the following: material information of a road boundary in different environments, material information of a road net height in different environments, or material information of a roadside object in different environments.

5. The method according to any one of claims 1 to 3, wherein the determining a radar feature layer based on the target polarization information and positioning information of the measurement apparatus comprises:
determining the radar feature layer based on the positioning information of the measurement apparatus and target polarization information that is in the target polarization information collected by the radar sensor and whose characteristic value is greater than a first characteristic threshold, wherein the characteristic value comprises at least one of the following: a distance, a horizontal angle, a pitch angle, target Doppler information, target reflected power, or angle measurement accuracy.

6. The method according to any one of claims 1 to 3, wherein the determining a radar feature layer based on the target polarization information and positioning information of the measurement apparatus comprises:

determining a weight of the target polarization information based on the target polarization information and the positioning information of the measurement apparatus, and
determining, based on the weight and the target polarization information, radar feature information that is in the radar feature layer and that is at a map location corresponding to the positioning information, wherein the radar feature information at the map location is used to provide positioning information for a vehicle.

7. A positioning method, wherein the method further comprises:

obtaining target polarization information collected by a radar sensor of a vehicle on a road on which the vehicle currently travels, wherein the target polarization information is used to describe target boundary information and target attribute information;
obtaining a radar feature layer of a high-precision map;
determining, based on the target polarization information collected on the road on which the vehicle currently travels and the radar feature layer, radar feature information that is in the radar feature layer and that matches the target polarization information;
determining, based on the radar feature information, positioning information corresponding to the radar feature information; and
determining a location of the vehicle based on the positioning information.

8. The method according to claim 7, wherein the obtaining target polarization information collected by a radar sensor on a road on which a vehicle currently travels comprises:

obtaining polarization information that is of an echo signal and that is collected by the radar sensor on the road on which the vehicle currently travels;
determining a boundary feature of the target and a material feature of the target based on the polarization information, and
determining the target polarization information based on the boundary feature of the target and the material feature of the target.

9. The method according to claim 7 or 8, further comprising:

obtaining target Doppler information collected by the radar sensor on the road on which the vehicle currently travels, wherein
the determining, based on the target polarization information collected on the road on which the vehicle currently travels and the radar feature layer, radar feature information that is in the radar feature layer and that matches the target polarization information comprises:

determining polarization information of a static target in the target polarization information based on the target Doppler information; and
determining the radar feature information based on the polarization information of the still target and the radar feature layer.

10. The method according to any one of claims 7 to 9, wherein the determining, based on the target polarization information collected on the road on which the vehicle currently travels and the radar feature layer, radar feature information that is in the radar feature layer and that matches the target polarization information comprises:

determining, based on the target polarization information, a boundary feature and a material feature of a target that are corresponding to the target polarization information;
determining, an environment in which the target is located based on the material feature that is of the target and that is corresponding to the target polarization information; and
determining, based on the boundary feature of the target and the environment in which the target is located, the radar feature information that is in the radar feature layer and that matches the target polarization information.

11. The method according to any one of claims 7 to 10, wherein the method further comprises:

determining road boundary information of a road on which the vehicle is located based on the radar feature information that is in the radar feature layer and that matches the target polarization information; and
planning a navigation route for the vehicle based on the location of the vehicle and the road boundary information.

12. A high-precision map generation apparatus, wherein the apparatus comprises:

an obtaining unit, configured to obtain target polarization information collected by a radar sensor of a measurement apparatus, wherein the target polarization information is used to describe target boundary information and target attribute information; and
a processing unit, configured to: determine a radar feature layer based on the target polarization information and positioning information of the measurement apparatus; and generate a high-precision map based on the radar feature layer.

13. The apparatus according to claim 12, wherein the obtaining unit is further configured to obtain polarization information that is of an echo signal and that is collected by the radar sensor of the measurement apparatus; and
the processing unit is further configured to: determine a boundary feature of the target and a material feature of the target based on the polarization information; and determine the target polarization information based on the boundary feature of the target and the material feature of the target.

14. The apparatus according to claim 12, wherein the obtaining unit is specifically configured to obtain target Doppler information collected by the radar sensor of the measurement apparatus; and
the processing unit is specifically configured to: determine polarization information of a static target in the target polarization information based on the target Doppler information; and determine the radar feature layer based on the polarization information of the static target and positioning information of the measurement apparatus.

15. The apparatus according to any one of claims 12 to 14, wherein the target boundary information comprises at least one of the following: boundary information of a road in different environments, boundary information of road clearance in different environments, or boundary information of a roadside object in different environments; and
the target attribute information comprises at least one of the following: material information of a road boundary in different environments, material information of a road net height in different environments, or material information of a roadside object in different environments.

16. The apparatus according to any one of claims 12 to 14, wherein the processing unit is further configured to determine the radar feature layer based on the positioning information of the measurement apparatus and target polarization information that is in the target polarization information collected by the radar sensor and whose characteristic value is greater than a first characteristic threshold, wherein the characteristic value comprises at least one of the following: a distance, a horizontal angle, a pitch angle, target Doppler information, target reflected power, or angle measurement accuracy.

17. The apparatus according to any one of claims 12 to 14, wherein the processing unit is further configured to determine a weight of the target polarization information based on the target polarization information and the positioning information of the measurement apparatus, and determine, based on the weight and the target polarization information, radar feature information that is in the radar feature layer and that is at a map location corresponding to the positioning information, wherein the radar feature information at the map location is used to provide positioning information for a vehicle.

18. A positioning apparatus, wherein the apparatus comprises:

an obtaining unit, configured to: obtain target polarization information collected by a radar sensor of a vehicle on a road on which the vehicle currently travels, wherein the target polarization information is used to describe target boundary information and target attribute information; and obtain a radar feature layer of a high-precision map; and
a processing unit, configured to: determine, based on the radar feature layer and the target polarization information collected on the road on which the vehicle currently travels, radar feature information that is in the radar feature layer and that matches the target polarization information; determine, based on the radar feature information, positioning information corresponding to the radar feature information; and determine a location of the vehicle based on the positioning information.

19. The apparatus according to claim 18, wherein the obtaining unit is specifically configured to obtain polarization information that is of an echo signal and that is collected by the radar sensor on the road on which the vehicle currently travels; and
the processing unit is specifically configured to: determine a boundary feature of the target and a material feature of the target based on the polarization information; and determine the target polarization information based on the boundary feature of the target and the material feature of the target.

20. The apparatus according to claim 18 or 19, wherein the obtaining unit is further configured to obtain target Doppler information collected by the radar sensor on the road on which the vehicle currently travels; and
the processing unit is further configured to: determine polarization information of a static target in the target polarization information based on the target Doppler information; and determine the radar feature information based on the polarization information of the static target and the radar feature layer.

21. The apparatus according to any one of claims 18 to 20, wherein the processing unit is specifically configured to: determine, based on the target polarization information, a boundary feature and a material feature of the target that are corresponding to the target polarization information; determine, based on the material feature that is of the target and that is corresponding to the target polarization information, an environment in which the target is located; and determine, based on the boundary feature of the target and the environment in which the target is located, the radar feature information that is in the radar feature layer and that matches the target polarization information.

22. The apparatus according to any one of claims 18 to 21, wherein the processing unit is specifically configured to: determine, based on the radar feature information that is in the radar feature layer and that matches the target polarization information, road boundary information of a road on which the vehicle is located, and plan a navigation route for the vehicle based on the location of the vehicle and the road boundary information.

23. A high-precision map generation apparatus, comprising a processor and a communication interface, wherein the processor is coupled to a memory by using the communication interface, and the processor is configured to execute program code in the memory, to implement the method according to any one of claims 1 to 6.

24. A positioning apparatus, comprising a processor and a communication interface, wherein
the processor is coupled to a memory by using the communication interface, and the processor is configured to execute program code in the memory, to implement the method according to any one of claims 7 to 11.

25. A computer-readable storage medium, comprising computer instructions, wherein when the computer instructions are run by a processor, the high-precision map generation apparatus is enabled to perform the method according to any one of claims 1 to 6.

26. A computer-readable storage medium, comprising computer instructions, wherein when the computer instructions are run by a processor, the positioning apparatus is enabled to perform the method according to any one of claims 7 to 11.

27. A computer program product, wherein when the computer program product runs on a processor, the high-precision map generation apparatus is enabled to perform the method according to any one of claims 1 to 6.

28. A computer program product, wherein when the computer program product runs on a processor, the positioning apparatus is enabled to perform the method according to any one of claims 7 to 11.

FIG. 1

FIG. 2a

FIG. 2b

Obtain target polarization information collected by a radar sensor of a vehicle — 301

Determine a radar feature layer based on the target polarization information and positioning information of the vehicle — 302

Generate a high-precision map based on the radar feature layer — 303

FIG. 3

High-precision map

Target 4

Target a2

Target a1

Target 2

Target 3

A

B

Target a3

Target a4

C

FIG. 4

```
┌─────────────────────────────────────────────────────────────┐
│           Collect target polarization information            │⟋ 501
└─────────────────────────────────────────────────────────────┘
                              │
                              ▼
┌─────────────────────────────────────────────────────────────┐
│                  Obtain a radar feature layer                │⟋ 502
└─────────────────────────────────────────────────────────────┘
                              │
                              ▼
┌─────────────────────────────────────────────────────────────┐
│     Determine radar feature information that is in the radar  │⟋ 503
│   feature layer and that matches target polarization information │
└─────────────────────────────────────────────────────────────┘
                              │
                              ▼
┌─────────────────────────────────────────────────────────────┐
│  Determine positioning information corresponding to the radar │⟋ 504
│                      feature information                      │
└─────────────────────────────────────────────────────────────┘
                              │
                              ▼
┌─────────────────────────────────────────────────────────────┐
│           Determine a positioned location of a vehicle       │⟋ 505
└─────────────────────────────────────────────────────────────┘
```

FIG. 5

FIG. 6

Lane
boundary

Navigation
direction

Current
location

Preset area a1

Positioned location A1

FIG. 7

FIG. 8

First part

Lane 2

Navigation
direction

Second part

Lane 1

Third part

Current
location

Preset area a3

Positioned location A3

FIG. 9

Area 4

Navigation direction

New boundary

Lane 4

Current location

Preset area a4

Positioned location A4

FIG. 10

1100

1101

1102

Obtaining
unit

Processing
unit

FIG. 11

1200

1201

Obtaining
unit

1202

Processing
unit

FIG. 12

1300

1301

Communication
interface

1302

Processor

1303

Memory

FIG. 13

1400

1401

Communication
interface

1402

Processor

1403

Memory

FIG. 14

## INTERNATIONAL SEARCH REPORT

| International application No. |
|---|
| **PCT/CN2021/079588** |

| A. | CLASSIFICATION OF SUBJECT MATTER |
|---|---|

G01S 13/89(2006.01)i

According to International Patent Classification (IPC) or to both national classification and IPC

| B. | FIELDS SEARCHED |
|---|---|

Minimum documentation searched (classification system followed by classification symbols)

G01C; G01S

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; 雷达, 地图, 定位, 极化, 边界, radar, LIDAR, map+, locat+, position+, polariz+, boundary

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110286384 A (WUHAN UNIVERSITY OF TECHNOLOGY) 27 September 2019 (2019-09-27) <br> description, paragraphs [0064]-[0092] | 1-28 |
| Y | CN 109031302 A (FORD GLOBAL TECHNOLOGIES, LLC.) 18 December 2018 (2018-12-18) <br> description, paragraphs [0007]-[0042] | 1-28 |
| A | CN 110779534 A (ZF ACTIVE SAFETY GMBH) 11 February 2020 (2020-02-11) <br> entire document | 1-28 |
| A | CN 110850439 A (AUTO CORE TECHNOLOGY (NANJING) CO., LTD.) 28 February 2020 (2020-02-28) <br> entire document | 1-28 |
| A | WO 2019076812 A1 (CONTI TEMIC MICROELECTRONIC GMBH et al.) 25 April 2019 (2019-04-25) <br> entire document | 1-28 |
| A | CA 2599482 A1 (NAVCOM TECH. INC.) 19 October 2006 (2006-10-19) <br> entire document | 1-28 |

☐ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 April 2021** | **26 May 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2021/079588** |

| Patent document cited in search report | | | Publication date (day/month/year) | Patent family member(s) | | | Publication date (day/month/year) |
|---|---|---|---|---|---|---|---|
| CN | 110286384 | A | 27 September 2019 | None | | | |
| CN | 109031302 | A | 18 December 2018 | US | 10823844 | B2 | 03 November 2020 |
| | | | | DE | 102018204829 | A1 | 18 October 2018 |
| | | | | US | 2018299545 | A1 | 18 October 2018 |
| CN | 110779534 | A | 11 February 2020 | US | 2020033153 | A1 | 30 January 2020 |
| | | | | DE | 102018005869 | A1 | 30 January 2020 |
| CN | 110850439 | A | 28 February 2020 | CN | 110850439 | B | 21 April 2020 |
| WO | 2019076812 | A1 | 25 April 2019 | DE | 102017123969 | B4 | 28 November 2019 |
| | | | | US | 2020256980 | A1 | 13 August 2020 |
| | | | | CN | 111491845 | A | 04 August 2020 |
| | | | | DE | 102017123969 | A1 | 18 April 2019 |
| | | | | EP | 3652035 | A1 | 20 May 2020 |
| CA | 2599482 | A1 | 19 October 2006 | AU | 2006234894 | A1 | 19 October 2006 |
| | | | | US | 2005225482 | A1 | 13 October 2005 |
| | | | | EP | 1872153 | A1 | 02 January 2008 |
| | | | | US | 7427945 | B2 | 23 September 2008 |
| | | | | JP | 2008536119 | A | 04 September 2008 |
| | | | | RU | 2407035 | C2 | 20 December 2010 |
| | | | | BR | PI0609082 | A2 | 16 November 2010 |
| | | | | AU | 2006234894 | B2 | 10 June 2010 |
| | | | | RU | 2007141645 | A | 20 May 2009 |
| | | | | WO | 2006110261 | A1 | 19 October 2006 |
| | | | | EP | 1872153 | B1 | 02 July 2014 |
| | | | | CN | 101156082 | A | 02 April 2008 |
| | | | | CN | 101156082 | B | 09 March 2011 |
| | | | | IN | 200701264 | P3 | 26 October 2007 |
| | | | | IN | 251319 | B | 09 March 2012 |

Form PCT/ISA/210 (patent family annex) (January 2015)

**REFERENCES CITED IN THE DESCRIPTION**

**Patent documents cited in the description**

- CN 202010368565